(19) Europäisches Patentamt
European Patent Office
Office européen des brevets

(11) EP 1 563 881 A1

(12) **EUROPEAN PATENT APPLICATION**
published in accordance with Art. 158(3) EPC

(43) Date of publication:
**17.08.2005 Bulletin 2005/33**

(21) Application number: **02779587.1**

(22) Date of filing: **14.10.2002**

(51) Int Cl.⁷: **A63F 9/24**, H04L 9/32

(86) International application number:
**PCT/ES2002/000485**

(87) International publication number:
**WO 2004/035159 (29.04.2004 Gazette 2004/18)**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **SCYTL ONLINE WORLD SECURITY, S.A.**
**08015 Barcelona (ES)**

(72) Inventors:
- **CASTELLA ROCA, Jordi**
  **E-25139 Menàrguens (ES)**
- **BORREL VIADER, Joan**
  **E-17464 Cervià de Ter (ES)**
- **RIERA JORBA, Andreu**
  **E-08251 Santpedor (ES)**
- **DOMINGO FERRER, Josep**
  **E-08800 Vilanova I La Geltru (ES)**

(74) Representative: **Gislon, Gabriele**
**Torner, Juncosa i Associats, S.L.**
**c/ Bruc, 21**
**08010 Barcelona (ES)**

# (54) METHOD OF OBTAINING AN IMPARTIAL RESULT OF A GAME VIA A COMMUNICATION NETWORK, AND RELATED PROTOCOLS AND PROGRAMS

(57) The invention relates to an impartial method of obtaining the result of a game played over a communication network using related computing means and/or computer programs. The inventive method employs cryptographic protocols and processes which have been specially designed in order to ensure security and honesty in the playing of games of chance over a communication network and to enable said games to be subdequently audited. The aforementioned cryptographic protocols and processes allow the game to be played in an honest and auditable manner without the need fo a trustworthy entity to manage the game.

More specifically, the method consists in identifying the different elements of the game, sorting said elements, secretely assigning an randomly permutation of said elements to each player, applying a commitment protocol to said permutation, making the result of the commitment accessible and, finally, generating the result of the game using at least part of said secret permutations.

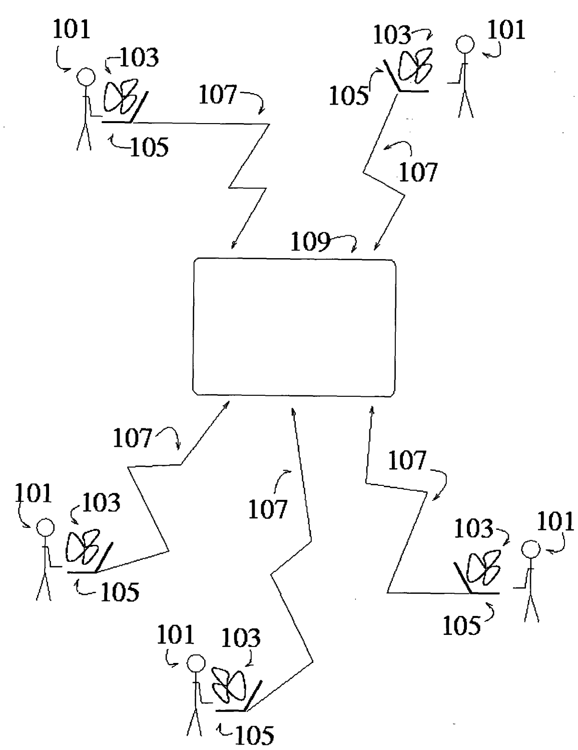


**Fig. 1**

EP 1 563 881 A1

Printed by Jouve, 75001 PARIS (FR)

## Description

### Field of the invention

This invention describes a method of guaranteeing that the result of a game involving chance events is honest, and auditable among a set of n participants or players who interact directly or indirectly amongst themselves via a communication network such as the Internet, without a third trustworthy party being necessary to ensure the honesty and auditing of said game, with one of these participants being a representative of a casino type game entity.

This invention relates to electronic games, and more precisely to cryptographic processes and protocols, as well as computer programs for implementing them, used to provide electronic game systems, preferably remote, with appropriate security, honesty and auditing means.

Throughout this specification the term cryptographic process shall be understood to be any ordered set of information transformation steps included in cryptographic operations. The term cryptographic protocol will be used herein to refer to a cryptographic process carried out between several participants, who exchange information between themselves via any data communication system.

According to such terminology, the aim of this invention is to provide an electronic game method including several cryptographic protocols to run games, in a safe, honest and auditable manner, particularly those including chance events, such as the casino types, which are played over communication networks such as the Internet, wireless data communication networks, or any other type of computer network.

The summary of this invention contains material that maybe protected by Copyright. The owners of said Copyright do not object at all to third parties reproducing the description of this patent application in its published or final version in Patent Offices, but they reserve all rights regarding the Copyright in other aspects that can be derived from said document.

### Background to the invention

Computer networks, and above all the worldwide interconnected network system known as the Internet, have made it possible for certain common activities, such as for example shopping, searching for information, or playing to be carried out remotely. This invention relates to playing via electronic means, particularly remote games, either to play usual chance games in casinos, with a roulette wheel, dice, cards or fruit gaming machines, or other less popular chance games, played with a finite number of elements.

However, the remote game involves a series of problems that have to be solved in order to guarantee that the development of the game combines the same conditions of security, honesty and auditing as the traditional game.

In a traditional casino, the players can see all the actions that the rest of the participants make, so that if they detect any dishonest action they can immediately report it publically. In the digital world, the situation is much more complex. For example, in a traditional casino any player can ask for a card without the rest of the participants in the game seeing it. In an online casino, however, if the communication network is open and the data transmitted is not encrypted, a third party can obtain information that is exchanged, and even alter it. Furthermore, in countries where the players who attend the traditional casino are registered upon entry, the player registration process at the entrance to the casino is a private process between the player and the casino. In an online casino, said privacy could be violated if a possible intruder were to obtain remote access to the casino's player database.

There is a wide range of general security measures that can be used to make a remote game system secure. Firewall systems, monitoring and event registration tools, demilitarised areas, intruder detection systems or integrity control systems (anti-virus, anti-Trojan, etc. ) can all be used to protect the servers in an online casino against possible external attacks across the communication network. Virtual Private Networks (VPN) can be used to secure data transmissions between different system nodes, if necessary. Data transport encrypting protocols, such as WTLS [WAP Forum, Wireless Transport Layer Security specification, Version 06-Apr-2001, April 2001]. TLS [Dierks, T. and Allen, C. The TLS protocol, version 1.0. Request for Comments 2246, January 1999], or the predecessor thereof SSL [Freir, A.O., Karlton, P. and Kocher, P.C. The SSL protocol, version 3.0. Internet-Draft, November 1996], can be used to guarantee the authenticity, integrity and confidentiality of the data exchanged across the network between the devices used by the players and the servers on the online casino. Digital signature mechanisms such as the one described in [Rivest, R.L., Shamir, A.Y., Adleman, L.M. A method for obtaining digital signatures and public-key cryptosystems. Communications of the ACM, v. 21 n. 2, pages 120-126, 1978] provide additional means for ensuring, against third parties, the authenticity and the non-repudiation of some of the messages exchanged.

As far as honesty is concerned, a key point to consider is the reproduction of the chance event. In a conventional game, the players can see how the roulette wheel turns, or how the cards that are to be dealt are shuffled. In the remote game, however, the results of the game must be generated without these elements present. The most usual way is by generating pseudo random numbers. A value is generated in a pseudo random manner, and the result of

the game is obtain from this.

Ideally, the pseudo random values should be generated in a way that nobody can manipulate the value obtained. A way of achieving this is by including an independent trustworthy entity in the game, called a Trusted Third Party, hereinafter TTP. Usually, the online casinos act as TTP and, at the same time, they take an active part in the game.

The casino, therefore, is in a privileged position. As detailed in [Gambling Review Body, Department for Culture Media and Sport of Great Britain, chapter 13, page 167, http://www.cutture.gov.uk/rote/gambting_review.htmt, 17 July 2001] the number of manipulations in the remote game is very high. The players are in an indefensive position without any type of certainty regarding the honesty of the game, and they cannot verify the actions of the other players, or those of the casino.

Another option is to generate the value in a combined manner between all the participants in the game, via a game cryptographic protocol. The cryptographic protocols in this invention guarantee that the value obtained has not been manipulated by anybody, or if it has, they guarantee that this is detected.

In order to guarantee the honesty of the remote game several authors have proposed cryptographic protocols for games in virtual environments (often called mental game protocols). These protocols are intended to ensure that if some or one of the parties does not follow the game rules, his activity and/or origin will be detected and that no party can be in a privileged position with respect to the others. Most of these protocols use a commitment protocol. This concept was introduced by Blum in 1982 [Blum M., Coin flipping by telephone: a protocol for solving impossible problems, Proc. IEEE Computer Conference, pages 133-137, IEEE, 1982]. A commitment protocol is a two-phase protocol, with a commitment phase followed by a commitment release phase. Said scheme can be simplified in a physical form as follows: In the first phase each participant places certain information in a box, which he locks and hands to the rest of the participants. In the second phase, he delivers the key for opening the box and recovering the information inside the initial box. The information is said to be 'committed' because it cannot be altered by the owner thereof between the first and second phase.

A general view of the state of the art with respect to commitment protocols can be found in [Schneier B., Applied Cryptography: protocols, algorithms, and source code in C, Second Edition, Wiley, 1996]. Most cryptographic protocols proposed for games relate to poker, since this is one of the most complex games of chance from the point of view of the theory of information. The first proposal [Shamir A., Rivest L., Adleman L., Mental Poker, Mathematical Gardner, pages 37-43, 1981] can only be used for two players, and the commutation based cryptosystem that it uses can reveal details of the opponent's cards. This protocol was improved in [Goldwasser S., Micali S., Probabilistic Encryption and How to Play Mental Poker Keeping Secret all Partial Information, In Proc. of the 14th STOC, pages 365-377, 1982], but its proposal can still only be used for two players. The afore-mentioned Fortune and Merritt protocol allows more than two players but requires the presence of a TTP, with the subsequent problems that this involves. In fact, all the cryptographic protocol proposals of the type mentioned, consider the need for a TTP an essential requirement, even in the most recent ones such as [Chou J-S., Yeh Y-S., Mental poker game based on a bit commitment scheme through network, Computer Networks, v. 38, pages 247-255, Elsevier, 2002]. Furthermore, various proposals such as those by [Crepeau C., A Zero-Knowledge Poker Protocol that Achieves Confidentiality of the Players or How to Achieve an Electronic Poker Face, Advances in Cryptology - Crypto '86, LCNS 263, pages 239-250, Springer-Verlag, 1986], [Kurosawa K., Katayama Y., Ogata W., Tsujii S., General Public Key Residue Cryptosystems and Mental Poker Protocols, Advances in Cryptology - Eurocrypt '90, LCNS 473, pages 374-388, Springer-Verlag, 1990] and [Schindelhauer C., A Toolbox for Mental Card Games, Medizinische Universitat Lubeck, 1998] must be considered as mere theoretical solutions, since they require excessive computing time to be able to be used in any practical implementation.

As well as the security and honesty of the game, the third fundamental aspect to be considered is that the auditing the game process so as to be able to solve possible disputes that arise between players or between the players and the casino regarding the results of the game. In traditional casinos, remote recording mechanisms are used to enable the casinos to solve disputes by subsequently reviewing the development of the game. In the case of online casinos, if the appropriate measures are not adopted, situations may arise in which for example the player wins but the casino does not want to pay the winnings, leaving the player without any valid evidence, before a court or authority that is entrusted with solving the dispute, to prove that he has been a victim of abuse on behalf of the casino.

Generally, enough information should be registered on the development of the game so that the subsequent analysis thereof allows any dispute that arises to be solved. Said register must guarantee that it is not possible to add, eliminate or modify any game entry without it being detected. Otherwise, the party owning the register could alter it to his advantage whenever he wants. Furthermore, each entry in the register must contain proof of the auditing thereof, to prevent the party that has generated said entry from being able to subsequently repudiate it.

Some prior inventions introduce systems and/or methods for remote games in a communication network. The most important examples are the inventions described in US 4,926,327, Sidley J., Computerised Gaming System; US 4,958,835, Tashiro K., Okamoto S., Okamoto T., Game Playing System; US 5,038,022, Lucero J.L., Apparatus and Method for Providing Credits for Operating a Gaming Machine; US 6,196,920, Spaur C.W., Lappin E., Wisler J.M., Online Game Playing with Advertising; GB2307184, Arthur J., Gaming Network; US 5,755,621, Marks H.M., Singer A.M.,

Modified Poker Card/Tournament Game and Interactive Network Computer System for Implementing Same; US 5,823,879. Goldberg S.F., van Antwerp J., Network gaming system. All these inventions only describe the operativity of the remote game, but do not insist on the afore-mentioned security, honesty and auditing problems.

A second group, representative examples being US 6,106,396, Alcorn A.E., Barnett M., Giacalone Jr L.D., Levinthal A.E., Electronic Casino Gaming System with Improved Play Capacity, Authentication and Security; US 6,117,011, Lvov D.E., Electronic Game System, Method of Managing and Regulating Said System; US 6,264,560. Goldberg S.F., van Antwerp J., Method and System for Playing Games on a Network; and WO9811686, Evensen K., Troxel R., Wakai B.M., Booth M., Ninh L., Takata K., Combined Digital Audio/Video on Demand And Broadcast Distribution System, only contemplate security at network level. Said inventions encrypt the communication between the participants in the game only to ensure their privacy, but do not provide any game protocol that guarantees the honesty of the game. Neither do they define any method for saving the information produced during the game, so that on the basis thereof unalterable evidence can be generated on the development of said game. This does not allow honest auditing to be guaranteed in the event of a conflict, since the evidence could easily have been altered.

The inventions described in US 6,264,557, Schneier B., Walker J.S., Jorasch J.A., Method and Apparatus for Securing Electronic Games; and US 6,165,075, Benjamin D.S., Susan C.C., Apparatus and Process for Verifying Honest Gaming Transactions Over a Communications Network, consider communication security and honesty in some games. Both use a commitment protocol as a basis. In the first invention, one of the commitment protocols introduced uses a symmetric cryptosystem. Each player commits himself to a value generated in a pseudo random manner, encrypting said value with a session key of said cryptosystem and sending the encrypted information to the rest of the participants. Using the set of values from the various players, the casino obtains the game result. The drawback with this commitment protocol is that if a participant, in said second phase of commitment release, delivers a session key that is different to the one used in the commitment phase, the rest of the participants will obtain a pseudo random value different from the one initially committed, and they will not be able to report the manipulation. In fact, the player does not commit himself to a value. In the Benjamin and Susan invention, a seed is generated between all the participants together for a pseudo random generator. The game results are obtained using this generator. In order to carry out the commitment an irreversible function is used, but it is not mentioned whether this is a collision-free function. It is to be understood that a function $f$ is collision-free if it is computationally difficult to find two different entries, $x \neq y$, that lead to the same outcome $f(x) = f(y)$. If the player can easily find several different colliding values, he is not really committed to a value. He can use one or the other according to whichever is more convenient. Also, in both inventions, the casino is acting as TTP, which involves the problems mentioned above.

In the two inventions mentioned, at the end they save the data exchanged between the players in a register, and both inventions include the possibility of digitally signing these data. This guarantees that registry entries cannot be repudiated or modified, but it does not prevent entries from being added or eliminated.

Brief summary of the invention

This invention describes a related method and protocols for obtaining an impartial result in a game across a communication network, via computing means and/or computing programs.

A first aim of this invention is to provide a method for obtaining a game result via a communication network in an honest, secure and auditable manner, without the need for a trustworthy third party to manage the game and guarantee the properties mentioned.

This invention focuses mainly, but not exclusively, on the most well known games of chance, common to casinos, however it can also be applied to games of chance that are less popular, because their rules are not so well known, or those games originating from other environments or cultures.

This invention divides the games of chance into various groups, since each game has specific operation rules, and therefore different needs, although common principles apply to all of them. In particular, three groups are established: throwing games, open card games, and reversed card games.

In the first group, the result of the game is based on obtaining a value or set of values at random, which are common to all those participating in the game. The roulette wheel or the dice are characteristic examples of games based on obtaining a single value; bingo or keno are characteristic examples of games based on obtaining various values.

The second group refers to games of chance in which each player obtains several values, as property, in an open manner. Open card games are the most well known in this group, and for this reason this group is called *open card games.* Black Jack is an important example of this group.

The third group is the most complex since each participant obtains, in property, one or several cards in a way that only said participant knows the value thereof. Poker is a distinctive example of this group.

Another aim of this invention is to overcome the practical limitations and drawbacks of the background work in reversed card game cryptographic protocols that do not use a trustworthy third party, and achieve the same level of

honesty as in the conventional game.

A further aim of this invention is to describe mechanisms that allow the game to be audited, guaranteeing that each participant can prove to a third party the actions that have taken place during the game. To this end, each cryptographic protocol operation becomes a link in a chain of information. Said chain is called a non-repudiated distributed hash chain, hereinafter DNC chain, or hash chain in the claims. When a participant builds a link in the DNC chain, it is communicated to the rest of the participants and therefore they all have the same DNC chain. The links are digitally signed. The digital signature guarantees the authenticity, integrity, and non-repudiation of each link. A link can only be added at the end of the chain, and no participant can modify or eliminate a link. The chain is efficient because it allows the participants in the game to carry out parallel calculations.

Another aim of this invention is to describe a robust commitment protocol that is alternative to those that already exist. The commitment protocol involves the following steps. The party that is committed to a certain value R1 has a pair of asymmetrical keys. Said party generates a value R2 in a pseudo random manner and adds certain redundancy to R1, so that R3 is obtained. He encrypts R3 with the private component of the pair of asymmetrical keys available, and encrypts R2 with the public component, obtaining the commitment Cp by carrying out an *or exclusive* operation on the encrypted values. In order to release the commitment and verify it, he reveals R2. The verifier encrypts R2 with the public key of the committing party, and calculates the *or exclusive* operation with Cp. He encrypts the result obtained with the public key of the committing party, obtaining R3. If R3 has the expected redundancy, the commitment is valid.

In the remote game method described in this invention, a group of *n* players or parties take part, with *n* being at least two, each of the parties being provided with a set of programs called game Agent, and a game Platform or device having sufficient computational capacity to implement said set of programs. The method has generally been designed so that casino type games can be developed, with a large number of players taking part as well as a central game entity (such as a casino), although it is also feasible to implement said method and related protocols between a group of players without the co-operation of said central entity or casino.

In this description of the invention, the term player i shall be understood to be the set made up of the actual player i who begins the process and the software or hardware component that implements the game cryptographic protocols plus the game platform of the player i. Therefore, the actions that the description indicates as being carried out by the player i are actually carried out by the software that implements the method and platform of player i. This convention has been used to facilitate understanding of the method.

Said remote game method described generally comprises some of the following elements: cards, faces of one or several dice, numbers of one or several roulette wheels and the figures of one or several wheels in a fruit gaming machine, or similar representations thereof. As a prior step to the game, and applicable to all the variants thereof exemplified in the invention, the various elements of the game are identified. Said identification makes it possible to establish an order of the elements, and therefore make a natural number between 1 and *t* correspond to each element. Once the game has begun, each player obtains a random permutation of the *t* game elements. The player keeps said permutation secret, and commits himself to it by applying a commitment protocol that he sends to the rest of the participants in the game. The result of the game is obtained by operating at least part of said secret permutations of said *n* players.

Before obtaining the result, an order of the permutations of said *n* players is established, based on a certain criterion such as the order in which said players entered the game. This order will be used to compose the permutations and to calculate the result of the game. Ordering the permutations allows an order between the players to be established, by assigning a natural number between 1 and *n* to each of them.

Initially, at least one value *w* is determined. This value can be selected by the players, or it can be preset by the game rules. The game rules can define explicitly the values *w* to be used, or that the players chose said values *w* together. Said value *w* is operated with at least the permutations of the players who have not taken part in its selection, and with all these if the value has been preset, obtaining at least one value *p*. The value *p* is a game element that will form part of the final result of said game. The players must verify that said value *p* is obtained in a correct and honest manner.

A player *i* of the said *n* obtains a game element *p*, that is a card, in the open card games by implementing the following game protocol. First of all a value *w* is determined, and it is made public. Said value w is established by means of any of the previously described options. In the preferred implementation, the player *i* generates a value *w* in a pseudo random manner that belongs to the range of game elements, and has not been selected previously by any other player. The player *i* sends *w* to the first player, according to the pre-established order.

The first player operates said value w with his secret permutation, and the one to which he is committed, obtaining a permuted value that he sends or makes accessible to the following player. Each player between 2 and *n*, after receiving or accessing the permuted value from the previous player, operates it with his secret permutation obtaining a new permuted value that he sends to the following player. The permuted value obtained by the last player *n* corresponds to said game element *p*, that is sent to player *i*.

The value *p*, according to the initial order, corresponds to the card in the pack requested by player *i*. This process is repeated until each player has all the cards required for developing the game. The cards obtained by each player and the game rules determine the winner of the game. Only the participants in the game take part in the process, acting on equal terms in the cryptographic protocol, without the need for a trustworthy third party. This way the honesty of the process is guaranteed, because each of the players has equal conditions, and can prove any alteration or dishonest action in the game.

In the game cryptography protocol developed for the group of reversed card games, player *i* obtains a value *p* corresponding to a card by means of the following steps. First of all a value *w* is determined and made public. Said value *w* is established by means of any of the previously described options. In the preferred implementation, player *i* generates a value *w* in a pseudo random manner that belongs to the range of game elements, and that has not been selected previously by any other player. Player *i* sends *w* to the first player, according to the pre-established order. The first player operates said value *w* with his secret permutation, and the one to which he is committed, obtaining a permuted value that he sends or makes accessible to the following player. Each player between 2 and *i* - 1, after receiving or accessing the permuted value from the previous player, operates it with his secret permutation obtaining a new permuted value that he sends to the following player. Each player *i* receives the permuted value from player *i* - 1 and operates it with his secret permutation. Next he protects the permuted value by concealing its contents using a system that allows operating with protected values, and he sends it to the next player. The rest of the players, from *i* +1 to *n*, after receiving the protected permuted value from the previous player, operate it with their secret permutation generating a new protected permuted value, and send the result to the following player. This step is repeated up to player *n*, who sends the new protected permuted value to player *i*.

Player *i* removes the protection from the protected permuted value received from player *n* obtaining a value *p*. Said value *p* corresponds to a card in the pack according to the initially established order. The card obtained by player *i* is a component of the result.

This process is repeated until each player has all the cards needed for the development of the game. The cards obtained by each player and the rules and operative of the game determine the winner of the game and the payment of the bets made beforehand or during the development of the game. As in the previous case, all the players participate on equal terms in the game protocol, which assures the honesty of said game.

The game cryptographic protocol proposed for the group of throwing games involves the following steps. First of all a value *w* is determined and made public. Said value *w* is established by any of the previously described options. In the case of games such as bingo, keno or the like, a single value is not determined, but instead the values necessary for the development of the game.

All the players generate a secret permutation and commit themselves to it by means of a commitment protocol that they communicate to the rest of the players. Once all the players have the commitments of the rest of the players they disclose the information needed to verify the commitment protocol, and they obtain or calculate said permutation of each player. With the composition of the permutations of said players in the established order, the resulting permutation is found. Value *w* is applied to said permutation result obtaining a value *p*. Value *p* corresponds to a game result according to the initially established order. In the case of the games such as bingo, keno or the like, the process is repeated with the rest of the values *w* mentioned, until all the values *p* necessary for determining the result of the game are obtained.

To summarise, this invention describes honest, auditable and secure electronic game methods and the game cryptographic protocols for guaranteeing said properties. The invention allows the electronic game across a communications network to achieve levels of honesty, auditing and security similar to those achieved in the physical game, without the need for a trustworthy third party being present.

Other aspects and details of the invention are referenced in the detailed explanation thereof, with the help of the drawings.

## Brief description of the drawings

Figure 1 shows a plurality of players 101 by means of a player agent 103 implemented in a game platform 105, who establish a connection 107 to a communication network 109, and play in a remote manner.

Figure 2 shows a DNC chain example. The chained hash of link 203 is built from the chained hash of the previous link 201, and from the data of link 203. Links 207 are an expansion of the DNC chain. The chained hash of each link 207 is calculated from the chained hash of link 205, and the data from said link 207. Link 211 is a contraction of the chain. The chained hash of link 211 is obtained from the summaries of links 209, and from the data of link 211.

Figure 3 shows the steps of the game cryptographic protocol with reversed cards. In step 301 the player $J_i$ requests from $J_1$ the card that corresponds to the position *w*. $\{J_1,...,J_i\}$ carries out step 303. In said step each player, once

he has received the value $w_j$ from the previous player, applies his secret permutation to $w_j$, and sends the result obtained $w_{j+1}$, to the following player. $J_i$ does not send $w_i$ to $J_{i+1}$, instead it carries out step 305. In said step 305 $J_i$ protects the game element $w_i$ obtaining $w'_i$ that is sent to $J_{i+1}$. In step 307 $J_{i+1}$ applies his secret permutation to the protected value $w'_i$, and sends $w'_{i+1}$ to $j_{i+1}$. Step 307 is repeated up to player $J_n$, who sends $w'_n$ to $J_i$. In step 309 $J_i$ removes the protection from $w'_n$, and obtains the desired game result element $w_n$, indicated in the claims as value *p*.

Figure 4 shows a graphical representation of the steps of the game cryptographic protocol for open cards. In step 401 player $J_i$ requests the card that corresponds to the position *w*. In the step 403 player $J_i$ applies his secret permutation to said game element *w*, and sends the result obtained $w_1$ to the next player. The process 403 is repeated up to player $J_n$ who sends $w_n$ to $J_i$. $w_n$ is an element of the desired game result, indicated in the claims as value *p*.

Figure 5 shows a general view of the steps of the game cryptographic protocol for throwing games. In step 501 player $J_i$ commits himself to a secret permutation and to a value, sending the commitment to the rest of the players. In step 503 the players commit themselves to a secret permutation, and send said commitment to the rest of the players. In step 505 the players show the committed information. In step 507 each player verifies the commitment protocol of the rest of the participants in the game, and calculates the result element *p* of the game of chance.

## Detailed description of the invention

Figure 1 shows a plurality of players 101 each provided with a software component called player agent 103 and a gaming platform 105 that has sufficient computational capacity to execute said game agent 103, all of them playing in a remote manner by means of a connection 107 to a communication network 109. The player agent 103, can be an application with secure remote connection capacity, or a Plug-In device in the browser of player 101. The game platform 105 is a device that allows the execution of the player agent 103, and which has the capacity to connect to a communication network 109. Said game platform 105 can be, for example, a personal computer, a personal digital assistant (PDA) or a mobile phone terminal. The communication network 109 can be the Internet, wire-less data communication networks, or any other type of computing network. The connection 107 to the communication network can be physical, or wire-less.

In the description of the cryptographic protocols of this invention, the following notations have been used.

- $J_i$: Player 101 i-n$^{th}$.
- $H\{m\}$: Digest message of *m*, obtained by means of a unidirectional, collision-free *hash* function.
- $m_1|m_2$: Concatenation of messages $m_1$ and $m_2$.
- $P_{entity}$, $S_{entity}$: Pair of *entity* asymmetric keys, with $P_{entity}$corresponding to the public component, and $S_{entity}$ corresponding to the private component.
- $S_{entity}\{m\}$: Encryption of the message *m*, carried out using the *entity* asymmetric private key.
- $P_{entity}\{m\}$: Encryption of the message m, created with the *entity* asymmetric public key.
- $S_{entity}$ $<m>$: Digital signature of the message *m*. The digital signature being understood to be the calculation of the digest of the message *m* by means of a hash function, and the encryption of this hash with the *entity* asymmetric private key.
- $K_{entity}$: E*ntity* secret symmetric key.
- $E_{Kentity}\{m\}$ : Encryption of the message *m* created with the *entity* symmetric key.
- $D_{Kentity}\{c\}$: Decryption of the message *c* obtained with the *entity* symmetric key.

In order to develop the games of chance it is necessary to use a series of elements, for example the faces of dice, the cards in a pack, etc. In the digital world, these physical elements are not available, only their representation. A typical representation could be a natural number. Before beginning the game it is necessary to order said game elements according to a determined criterion, so that each element can be identified in a unique way by a natural number between 1 and *t*. In the description of the protocols an order of players 101 is established according to a certain criterion, such as the order of entering the game, and each player 101 is identified by a natural number between 1 and *n*.

So that the players 101 can prove to a third party that the game has been honest, this invention uses preferably a special type of hash chains, which are called Distributed Notarization Chains (in short DNC). Each message exchanged by the players 101 is a link in a DNC chain. The properties of this type of chain guarantee that the information which the players 101 exchange during the game cannot be altered subsequently without said modification being detected. A modification being understood to mean eliminating, adding or altering the data sent by a participant in the game.

The concept of hash chains was introduced in [Lamport L., Password Authentication with Insecure Communications, Communications of the ACM, v. 24, pages 770-771, 1981]. In her proposal the hash chains were used to

authenticate a user. Sequential hash chains are a widely used tool.

The DNC hash chains proposed in this invention have the particular feature that they are calculated efficiently. In the points where calculations can be performed in parallel, the chain expands. Each player 101 builds his link using the chained hash of the link from which the chain expands. When the protocol again requires sequential implementation, the chain contracts. Said contraction consists in creating a new chain link from the chained hash of the last expanded link of each player 101.

The DNC chains have the following properties:

- No participant in the construction of the chain can add erroneous or false links without this action being detected by the rest of the participants.
- In the event that someone eliminates one or more links, the chain will show an inconsistency in the point of elimination.
- If a chain link is modified, the chain will become inconsistent, and the modification will be easily detected.
- The chain links allow to know the exact moment and the order in which they were generated.
- The chain links include auditing evidences on each link, that is, that the entity that has provided the chain link is the only one that could generate it.
- The chain link calculation is carried out in parallel when the protocol allows it.
  This measure improves its efficiency by fulfilling the previous properties.

The DNC chains are constructed as follows:

Each link $m_k$ in the chain is formed by two attributes, the first attribute containing the data ($D_k$) and the second attribute containing the chained hash ($X_k$):

$$m_k = D_k, X_k \tag{1}$$

Typically the data attribute $D_k$ has the following structure: the generation time ($T_k$), concept ($C_k$) related to the link and additional values or attributes ($V_k$).

The time, $T_k$, refers to the local current time according to the clock of the participant generating the link. It is not necessary for the participants' clocks to be synchronised.

The concept $C_k$ describes the information that the link contains. Each link can be, for example, a step in the game protocol, a commitment, or the result of the game. In each case the concept details the type of link. The additional attributes $V_k$ vary according to the concept. For example, in the event that the link contains the result of a commitment protocol, the attribute will contain the transformation of the committed element:

$$D_k = T_k, C_k, V_k \tag{2}$$

The chained hash of the link $X_k$ is built in three phases: First of all, the chained hash of the previous link $X_{k-1}$ is concatenated with the data from the current message $D_k$. Then the hash of the concatenated set is calculated. Finally said hash is digitally signed with the private key of the author of the link:

$$X_k = S_{Ji} \langle D_k \mid X_{k-1} \rangle \tag{3}$$

Figure 2 shows a graphic example of the previous description. The chained hash of link 203 is built from the data of link 203, $D_k$, and from the chained hash of link 201, $X_{k-1}$.

Each participant in the construction of the chain will normally have a different processing speed. If the construction is sequential, the total time for implementing a protocol step will be the sum of all the individual times. In the event of an implementation in parallel, the time will be equal to the time of the slowest platform. Expression 4 shows an expansion of the chain. Said expansion consists in all the participants in the protocol $\{J_1,...,J_n\}$ calculating their

chained hash independently using the chained hash from the previous link $X_{k-1}$:

$$X_k^{J_1} = S_{J_1}\langle D_k^{J_1} \mid X_{k-1}\rangle$$

$$\vdots$$

$$X_k^{J_n} = S_{J_n}\langle D_k^{J_n} \mid X_{k-1}\rangle \quad (4)$$

As can be seen in Figure 2, links 207 are built in parallel. The chained hash of each link 207 is built with the data of said link 207 plus the chained hash of the previous link 205.

Expression 5 shows the contraction of the chain. This is the inverse process of the expansion, and it occurs when the protocol again requires sequential implementation after a parallel implementation phase. A single link is obtained that is connected to the previous links. The participant in the game who begins the sequential process concatenates the data $D_k$, with all the chained summaries of the previous links $\{X_{k-1}^{J1}/.../X_{k-1}^{Jn}\}$, calculates the hash of this concatenated message and digitally signs said hash:

$$X_k = S_{J_i}\langle D_k \mid X_{k-1}^{J1} \mid ... \mid X_{k-1}^{J_n}\rangle \quad (5)$$

As can be seen graphically in Figure 2, the chain of link 211 is made up of the data of said link 211, plus the chained summaries of links 209.

The DNC chain prevents a player 101 from being able to subsequently add, eliminate or modify any link to his advantage, without the rest of the players detecting said modification through the verification process.

In fact, eliminating one or several links implies that the chain becomes inconsistent. Any party can check whether there is any part that is not correctly built, by verifying the construction of the chain. This inconsistency in the chain is known as the breaking point. The dishonest player 101 should be capable of rebuilt the chain to avoid being detected. But to do this he would need the private key of the rest of the participants who have taken part in the construction process.

Therefore, eliminating a link without the alteration being detected is equivalent to retrieving the secret key of the players from the public component, and this is considered to be an extremely difficult operation.

In the event that the data in a link are modified, the corresponding chained hash would not coincide. This makes it easy to detect the modification when the link is verified. Preventing the modification from being detected implies, as in the previous case, rebuilding the chain and therefore having access to the secret key of the rest of the participants.

The same grade of difficulty is involved in trying to add an entry without the manipulation being detected.

The DNC chain is not only known by a single party, but by all the participants in the game. When a player 101 generates a new link he sends it to the rest of the participants. All the participants have the DNC chain, and with it they can prove to a third party that the game has been implemented honestly. In the event that a player 101 manipulates the chain, this chain will be different from the rest. When he shows his chain it will not coincide with the rest, and the manipulation will be detected. It can be concluded that the chain links cannot be altered once they are created.

A tool that is used frequently in remote game protocols is the commitment protocol. A commitment protocol is a cryptographic protocol that allows a participant *A* to commit himself to a value (either a byte or a chain thereof), against another participant *B* so that:

- *B* cannot know the value committed by *A* from the protocol.
- *A* can open the commitment by revealing the committed value to *B*.
- Given a commitment, *A* cannot cheat *B* by revealing a different value from the one committed in said commitment.

The first commitment protocol (for a single bit) was introduced in [Blum M., Coin flipping by telephone: a protocol for solving impossible problems, Proc. IEEE Computer Conference, pages 133-137, 1982]. A general view of the different commitment protocols proposed can be found in [Schneier B., Applied Cryptography: Protocols, Algorithms, and Source Code in C, Second Edition, John Wiley & Sons, 1996].

The most efficient commitment protocols in calculation time are the ones based on hash functions. Ideally,

these functions must fulfil the requirements that are detailed in [Menezes A., Van Oorschot P.C., Vanstone S.A., Handbook of Applied Cryptography, pages 323-331, CRC Press, 1996]. But some of the hash functions used are weak against collisions, as described in [Van Rompay B., Preneel B., Vandewalle J., On security of dedicated hash functions, 19th Symp. On Information Theory in the Benelux, pages 103-110, 1998], and [Preneel B., The state of cryptographic hash functions, Lectures on Data Security: Modern Cryptology in Theory and Practice, LNCS 1561, pages 158-182. Springer-Verlag, 1999]. The strength of most of these functions is evidenced through empirical tests. This means that there is no complete certainty on the security thereof.

Another factor to consider is the possibility of repudiating the commitment carried out. So that the commitment cannot be repudiated it must include the digital signature of the committing party.

This invention provides a robust commitment that includes non-repudiation and fulfils the afore-mentioned strength requirements. In this way the weaknesses mentioned above are overcome, which are present in the commitment protocols in inventions US 6,264,557 and US 6,165,072.

The proposed commitment protocol is a development of one proposed by [Jakobsson M., Sako K., Impagliazzo R., Designated Verifier Proofs and Their Applications, Theory and Application of Cryptographic Techniques, pages 143-154, 1996] in a field of cryptology different to the one considered in this invention as is the construction of non-interactive zero-knowledge protocols.

In this case the commitment is obtained from the public and private components of the only player (noted by *A*), who commits himself:

The player *A* has a pair of asymmetric keys ($P_A$, $S_A$), with $P_A$ being the public component and $S_A$ being the private one which is kept secret by *A*. The public component is duly certified by a Certification Authority, and is accessible to the rest of the players in the protocol.

Player A generates the following values secretly:

- *R1*: Secret value to which player 101 commits himself.
- *R2*: Secret pseudo random value of length *k*.

With *Id* being the identifier of player A, the latter concatenates his identifier with the value *R*1: *R*3 = *Id* | *R*1. Then with his private key he encrypts the chain *R*3, $S_A\{R3\}$, and with his public key the value *R*2, $P_A\{R2\}$. The bit commitment will be the bit to bit *or exclusive* operation of the two previous cryptograms, with commitment *Cp* being obtained, which is sent to another player 101 or to the rest of the players 101 (indicated by *B*):

$$Cp = S_A\{R3\} \oplus P_A\{R2\} \qquad (6)$$

To undo the commitment *A* reveals the value *R*2 and *B* carries out the following operations:

- He encrypts the value *R*2 with the public key of *A*, $P_A\{R2\}$.
- He obtains the signature on the committed value, calculating the bit to bit *or exclusive* operation of the commitment *Cp* with $P_A\{R2\}$, $S_A\{R3\} = Cp \oplus P_A\{R2\}$.
- With the public key of *A* he obtains *R3*, $R3 = P_A\{S_A\{R3\}\}$.
- *B* checks that *R*3 contains the identifier of player *A*, *R3* = *Id* | *R1.* In the event that *R3* does not contain the correct *Id*, the commitment is not valid.
- If the *Id* is correct, *B* obtains the committed value *R1*, with the certainty that it could only have been committed by *A*.

Owing to the size of the value *R2* and the use of the bit to bit *or exclusive* operation and the inclusion of the identifier *Id* of the player 101 making the commitment, the operation for obtaining the value *Cp* described in 6fulfils the following two characteristics:

- One-way: A function is one-way or irreversible when the input values cannot be obtained (in polynomial time) from the function output value.
- Collision-free: a function *f*(*x*) is collision-free if it is computationally impossible to find several values $\{k_1,...,k_n\}$,

such that *$f(k_1) = f(k_2) = ... = f(k_n)$*.

Next the cryptographic protocol for games with reversed cards is presented. In said games, the participant who asks for a card or a set of cards is the only one who knows the value of such cards thereof. In the background to the invention this problem is termed *Mental Poker.* The first protocol for playing poker in a remote manner, without the help of a Trusted Third Party - TTP was the one introduced in [Shamir A., Rivest R., Adleman L., Mental Poker, Mathematical Gardner, pages 37-43, 1981]. This protocol is based on a commutative cryptosystem, but the proposed cryptosystem reveals certain information, as detailed in [Coppersmith D., Cheating at mental poker. In Crypto '85, LCNS 218, pages 104-107, Springer-Verlag, 1986], and only allows the game to have two participants. Subsequently, the protocol of [Goldwasser S., Micali S., Probabilistic encryption and how to play mental poker keeping secret all partial information, In Proceedings of the 14th STOC, pages 365-377, 1992] guarantees an honest game, but once again only with two players. The proposal by [Banary I., Furedi Z., Mental poker with three or more players, Technical report, Mathematical Institute of the Hungarian Academy of Sciences, 1983] does not use cryptographic primitives to guarantee an honest game, but if two players 101 conspire together they can know the cards of the rest of the participants. This is the first proposal the use of permutations and the composition of these to shuffle the cards. In the protocol presented in [Fortune S., Merritt M., Poker protocols, In Crypto '84, LCNS 196, pages 454-466, Springer-Verlag, 1985] more than two players can play simultaneously, but initially a TTP is required, with the consequent problems this involves. Subsequently [Crepeau C., A zero-knowledge poker protocol that achieves confidentiality of the player's strategy or how to achieve an electronic poker face, In Crypto '86, LCNS 263, pages 239-250, Springer Verlag, 1986] presents a game protocol that solves the problems of the remote game. The protocol is based on using permutations and specific protocols with a high computational cost and high implementation complexity. These two limitations do not make it possible to feasibly use this protocol in a real online casino.

In the protocol of this invention the mixture of the game elements, that is the card shuffling process, is carried out without the participation of any TTP. The cards are shuffled with the co-operation of all the participants in the game. This way it is assured that in the process no player 101, or conspiracy of players, can force the component of the final result, that is, the final value of the card obtained. Each player 101 generates a random permutation of the cards in the pack which he keeps secret and commits himself to by means of a commitment protocol. The pack of shuffled cards is made up of the composition of the permutations of all the players 101.

A player *i* asks for a card from a value *w*. Said value *w* can be selected by the players, or it can be preset by the game rules. The game rules can define explicitly the values w to be used, or that they can be elected jointly by the players.

The first player, according to the established order, applies his permutation to w and sends the result to the following player. Each player 101, in the established order, applies his permutation to the value received from the previous player 101. The use of permutations ensures the uniqueness of the cards. But it is also necessary that the owner of the card is the only one who knows its value. For this reason player *i* protects the card, or preferably he encrypts it with his secret key.

Each of the remaining participants applies his permutation to the encrypted values. At the end player *i* uncovers the card and only he knows its value. In order to be able to apply a permutation to an encrypted value it is necessary to represent the values and permutations in a way that allows operating with them. Said representations are described further on. The cryptosystems that allow operating with encrypted data are called homomorphic cryptosystems or privacy homomorphisms. Beforehand the game protocol of this invention can be developed with any privacy homomorphism that preserves the sum and product operations, two characteristic examples being those presented in [Domingo-Ferrer J., A New Privacy Homomorphism and Applications, Information Processing Letters, vol. 60, no. 5, Dec. 1996, pp. 277-282] and [Domingo-Ferrer J., A provably secure additive and multiplicative privacy homomorphism, Lecture Notes in Computer Science, vol. 2433, sep. 2002. ISSN 0302-9743. Vol. Information Security, eds. A. Chan and V Gligor, Berlin: Springer-Verlag].

The concepts and tools that are used subsequently in the reversed cards protocol are described below.

Normally each card is assigned a certain natural value that, given a preset order, corresponds to a particular figure or card in the traditional pack of cards. For example, if a Spanish pack of cards is placed in the order of Gold Coins, Clubs, Swords and Cups and within each group the ascending order of the cards is between one (Ace) and twelve (king), the value 15 would correspond to the three of Clubs.

In this reversed cards protocol, a card representation is required that allows operating with them and the card permutations. Therefore a card is defined in vector form, as follows:

Let *t* be the number of the cards in the pack, in a preset order, and *z* a prime integer value chosen by a player 101. A card *w* is defined as a vector:

$$v = (a_1, \ldots, a_t) \tag{7}$$

Where a single element $a_i$ exists, such that $a_i$ mod $z \neq 0$, and the rest of the values of the vector, $\forall a_j \mid i \neq j$, fulfils $a_j \bmod z = 0$. The value of the card is equal to the value of the index $i$ of the vector such as $a_i \bmod z \neq 0$.

For their part, the card permutations are represented as a matrix so as to allow operating with them, as mentioned above.

For a better understanding of the invention, a definition of a series of concepts to be used next, is provided

**Card permutations:** A permutation $\pi$ on a set $S$ is a biyective function of $S$ on S ($\pi : S \rightarrow S$). In this case, $S$ is the pack of cards used. Typically the permutations are represented as conversion tables, where each index has an output value that belongs to the same initial set.

**Card permutation matrix:** It is possible to represent a card permutation $\pi$, on a set of $t$ elements as a square matrix with $t$ rows, that is called a *Card Permutation Matrix,* where the vector of each row and that of each column are in the form w described in 7. The *Card Permutation Matrix* of $\pi$ is indicated by $\Pi$.

$$\Pi = \begin{pmatrix} \pi_{1,1} & \pi_{1,2} & \cdots & \pi_{1,t} \\ \vdots & \ddots & & \vdots \\ \vdots & & \ddots & \vdots \\ \pi_{t,1} & \pi_{t,2} & \cdots & \pi_{t,t} \end{pmatrix} \tag{8}$$

Each row $i$ of matrix $\Pi$ is a card, the value of which is equal to the permutation of $\pi(i)$. In order to build card permutation matrix $\Pi$, from the card permutation $\pi$, the permutation of $i$ in $\pi$, $\pi(i)$ is calculated for each row i. All the row elements are zero module $z$, except the position $j$ such that $j = \pi(i)$.

**Calculate a permutation:** In the chosen representation a card can be operated with a card permutation matrix. The result of this operation is a new card. The operation for obtaining a new card is multiplying the initial card $v$ by the card permutation matrix $\Pi$, $w = v \cdot \Pi$

$$w = (a_1, \cdots, a_t) \cdot \begin{pmatrix} \pi_{1,1} & \cdots & \pi_{1,t} \\ \vdots & \ddots & \vdots \\ \pi_{t,1} & \cdots & \pi_{t,t} \end{pmatrix} \tag{9}$$

$$w = (b_1, \ldots, b_t) \tag{10}$$

It is necessary that the card and the card permutation matrix use the same $z$, in order to carry out this operation correctly. If this rule is not followed, the correct permutation will not be obtained.

**Equivalent card permutation matrix:** Each player 101 has a matrix with his own $z_i$, and represents the cards using this $z_i$. So that $J_i$ can operate his card permutation matrix with the card of $J_{i-1}$, $J_i$ must represent his card permutation matrix with the $z_{i-1}$ of $J_{i-1}$. The term equivalent card permutation matrix $\Pi'_i$ is given to the matrix created from the permutation $\pi_i$ taking $z'$.

$$\Pi \equiv \Pi' \tag{11}$$

$$\begin{pmatrix} \pi_{1,1} & \cdots & \pi_{1,t} \\ \vdots & \ddots & \vdots \\ \pi_{t,1} & \cdots & \pi_{t,t} \end{pmatrix} \equiv \begin{pmatrix} \pi'_{1,1} & \cdots & \pi'_{1,t} \\ \vdots & \ddots & \vdots \\ \pi'_{t,1} & \cdots & \pi'_{t,t} \end{pmatrix} \quad (12)$$

The equivalent card permutation matrix of $\Pi$ is defined as matrix $\Pi'$ whereby the following is fulfilled for each matrix index:

- If $\pi_{i,j}$ mod $z \neq 0$, then $\pi'_{i,j}$ mod $z' \neq 0$, where $\pi_{i,j} \in \Pi$ and $\pi'_{i,j} \in \Pi'$.
- *If* $\pi_{i,j}$ *mod* $z = 0$, then $\pi'_{i,j}$ *mod* $z' = 0$, where $\pi_{i,j} \in \Pi$ and $\pi'_{i,j} \in \Pi'$.

A pack of cards is made up of *t* cards as described above. Each $J_i$ creates a permutation $\pi_i$ and keeps it secret. The shuffled pack is made up of the composition of the permutations of all the *n* players 101 in a preestablished order, $\pi_n \circ \pi_{n-1} \cdots \pi_2 \circ \pi_1$. In this way it is possible to shuffle the pack between all the players 101, without any of them having any advantage. The composition of the permutations ensures the uniqueness of the cards, as it is not possible for the cards to be repeated.

As mentioned before, player 101 encrypts his card to conceal its value, and the rest of the players 101 apply their permutation to said encrypted value. The cryptosystem to be used must guarantee the privacy of the data, and allow operating with encrypted data.

A privacy homomorphism PH is an encrypted scheme that conserves certain operations. In other words, supposing that $E_k$ is a PH that preserves the sum, given two values *x* and *y*, it is the same whether you add the two values and then encrypt the result, or encrypt the values and then calculate the sum:

$$E_k(x + y) = E_k(x) + E_k(y) \quad (13)$$

In this detailed description, preferably the privacy homomorphism proposed in [Domingo-Ferrer J., A provably secure additive and multiplicative privacy homomorphism, Lecture Notes in Computer Science, vol. 2433, sep. 2002. ISSN 0302-9743. Vol. Information Security, eds. A. Chan and V. Gligor, Berlin: Springer-Verlag] is used, but any other one that preserves said sum and product operations can be used.

Next the reversed card game protocol is described in detail and in a formal manner, with the help of the Figures 1 and 3. Figure 3 shows a general description of the cryptographic protocol steps for obtaining a card.

First of all, a value w is determined and made public. Said value w belongs to the range of game elements and has not been selected previously. The value w can be chosen by said player *i*, or preset by the game rules. The game rules can define explicitly the values *w* to be used, or that the players choose said values *w* jointly. In the preferred implementation, and in the detailed explanation thereof, value *w* is chosen by player *i*. It can be guaranteed that said value *w* has not been chosen previously because the chosen values w are known, or because each player has a different range of values to choose from. In step 301 player $J_i$ sends value *w* to $J_1$.

In step 303 $J_1$ calculates the permutation of said value with his secret permutation, and sends the resulting value $w_1$ to $J_2$. In Figure 3 it can be appreciated how this process 303 is repeated up to $J_i$. Said player $J_i$ applies his permutation to value $w_{i-1}$ received from $J_{i-1}$, obtaining $w_i$. $J_i$ must send the result to the rest of the players $\{J_{i+1},...,J_n\}$ so that they apply their permutation. However, if he sends the obtained value without encrypting it, the value of his card will be known. In order to guarantee the privacy of said card, in step 305 $J_i$ encrypts $w_i$ obtaining $w'_i$ which is sent to $J_{i+1}$. In step 307 $J_{i+1}$ applies his permutation to $w'_i$ obtaining $w_{i+1}$ which is sent to the next player. This process 307 is repeated up to the last player $J_n$ who sends the obtained value $w'_n$ to $J_i$.

Said player $J_i$, in step 309, decrypts the value $w'_n$ obtaining the value $w_n$, which according to said initial identification corresponds to the card in the pack requested by $J_i$. Said value $w_n$ is indicated in the claims as value *p*.

In Figure 3 the actions carried out by $J_i$ are indicated inside a solid line rectangle. A padlock is used to symbolise the encryption and the decryption operations. The calculations that are made with encrypted data are found inside a dotted line rectangle.

In order to apply a permutation to an encrypted data, it is necessary that the values and the permutations are represented in a way that allows operating with them mathematically. Said representation is based on representing the values in vector format, and the permutations in matrix format. Calculating a permutation involves multiplying the vector by the matrix. In order to achieve the privacy of the card, the vector and the matrix indices are encrypted with

a privacy homomorphism. This cryptosystem allows operating with encrypted data. Thanks to the representation and the homomorphic encryption, the permutations can be calculated while preserving the privacy of the card of $J_i$.

Every message exchanged by the players 101 is a link in the afore-mentioned DNC chain. In the event of any manipulation, this chain can evidence this vis-à-vis to a third party.

At the beginning of the protocol, each player 101, before starting the game, performs the operations described below.

**A**1: Each player $J_i$ has a pair of asymmetrical keys $(P_j, S_j)$ and the certification of the public component from a recognised certifying entity.

**A**2: He generates a permutation $\pi_i$ of the pack of $t$ cards and keeps it secret.

**A**3: He generates his symmetric key $K_i$ corresponding to the PH. Each $J_i$ has a different and secret $K_i$.

**A**4: He chooses a prime value $z_i$, such as $z_i < K_i$.

**A**5: He builds a chain link, where concept $C_k$ describes that the link contains the $z_i$ used by $J_i$, and attribute $V_k$ contains $z_i$. With all the players 101 performing this action simultaneously, the DNC chain expands at this point.

**A**6: He builds the $\Pi_i$ permutation matrix, corresponding to $\pi_i$, using $z_i$.

**A**7: He commits himself to this $\pi_i$ permutation by means of a bit commitment protocol. Obtaining $Cp_i$ as the committed value.

**A**8: He builds the next chain link using the previous expanded link. The concept $C_k$ indicates that said link contains the commitment, and that attribute $V_k$ contains $Cp_i$. The protocol will be preferably the one proposed above, or any of the ones mentioned in the background to the invention.

**A**9: He chooses $s$ values $\{\delta_1,...,\delta_s\}$, such that $\delta_i \ mod \ z = 0$, $\forall i \in \{1,...,s\}$, *and* $s > t$.

**A**10: He chooses $s$ values $\{\varepsilon_1,...,\varepsilon_s\}$, such that $\varepsilon_i \ mod \ z \neq 0$, $\forall i \ \varepsilon \ \{1,...,s\}$, and $s > t$.

**A11:** He encrypts the previous values with the secret key $d_j = E_{K_i}(\delta_j)$, $e_j = E_{K_i}(\varepsilon_j)$ $\forall j \in \{1,...,s\}$

**A**12: He builds the next chain link where the attribute $V_k$contains set $D$ of the values $\{d_1, ...,d_n\}$. Concept $C_k$ details that the link contains a set of values that are zero module $z_i$, and are encrypted.

**A**13: He builds another chain link where the attribute $V_k$ contains set $E$ of the values $\{e_1,...,e_n\}$. Concept $C_k$ details that the link contains a set of non-zero module $z_i$ values, and are encrypted.

**A**14: He generates the vector representation of the $t$ cards in the pack $\{w_1, ...w_t\}$, and encrypts them with the secret key $K_i$, $w'_j = E_{K_i}(w_j)$.

**A**15: He permutes the order of the encrypted cards, $\{w'_1, ..., w'_t\}$.

**A**16: He builds the next chain link. Concept $C_k$ of the link indicates that it contains a pack of cards encrypted by $J_i$. Attribute $V_k$ contains said encrypted cards, $\{w'_1,...,w'_t\}$, according to the order of step A15.

Once this initialization phase has finished, player 101 who acts as croupier contracts the chain. The chain of the resulting link is made up of the last links built by each player 101, $J_i$. Concept $C_k$ details that the initialization phase has finished, and the game can start. Attribute value $V_k$ does not contain any data.

When $J_i$ wants to chose a card, he performs the following operations.

**B**1: He chooses a value $v$ such that $1 \leq v \leq t$, that nobody has selected previously. This operation is simple because the request is made in public. All the participants know the initial values that have been selected previously.

**B**2: He builds the next chain link, where $V_k$ contains $w$ that is the vector representation of the value $v$, and $C_k$ details that $J_i$ wants the card that corresponds to value $w$.

$J_1$, once he receives the link from $J_i$, performs the following operations:

**C**1: He checks the validity of the link sent by $J_i$.

**C**2: He calculates the equivalent card permutation matrix $\Pi'_1$ of his matrix $\Pi_1$. He can perform this operation because he knows the value $z_i$ that $J_i$ has made public in step A5.

**C**3: He calculates the permutation of the card $w$ with his equivalent card permutation matrix $\Pi'_1$, $w_1 = w \cdot \Pi'_1$.

**C**4: He builds the next chain link. Concept $C_k$ describes that said link contains $w_1$, and that $J_2$ must perform the following calculation. Attribute $V_k$ contains the value $w_1$.

The process is repeated with all the following players 101, $\{J_2,...J_{i-1}\}$, up to $J_i$. $J_i$ obtains $w_{i-1}$, from the link built by $J_{i-1}$, and performs the following calculations.

**D**1: He checks the validity of the link sent by $J_{i-1}$.

**D**2: He applies his permutation to $w_{i-1}$, and obtains $w_i = w_{i-1} \cdot \Pi_i$.

**D**3: He modifies row $j$ of $\Pi_i$, where $j$ is equal to the value of the card $w_{i-1}$. *He* changes all the elements in row $\pi_{j,1},...,\pi_{j,t}$, for non-zero module $z_i$ values. If a player 101 requests from $J_i$ the cards that the latter requested previously, he will obtain a non valid card as detailed below.

**D**4: He chooses the encrypted card $w'_j$ corresponding to the value of the obtained card $w_i$. This encrypted card was made public in the initiation phase, specifically in step A16.

**D**5: He builds the link whose $V_k = w'_i$, and $C_k$ details that $J_{i+1}$ must apply his permutation to said encrypted value.

$J_{i+1}$ must multiply the encrypted card $w'_i$ by his matrix $\Pi_{i+1}$ to obtain the following encrypted card $w'_{i+1}$. In order to be able to perform this operation, he must encrypt his matrix $\Pi_{i+1}$ with the secret key $K_i$ of $J_i$. But this key is only known by $J_i$. In order to encrypt the matrix, $J_{i+1}$ uses the encrypted values provided by $J_i$ in the initialization phase (step A12 and A13), $\{d_1,...,d_s, e_1,...,e_s\}$. This construction process of the encrypted matrix prevents $J_i$ from subsequently obtaining the information necessary for reproducing $\Pi_{i+1}$ from the encrypted card, $w'_{i+1}$. The encrypted matrix of $J_{i+1}$ with the key $K_i$, is indicated as $\Pi^c_{i+1}$. $J_{i+1}$ performs the following operations:

**E**1: He checks the validity of the link received from $J_i$.

**E**2: He encrypts his matrix $\Pi_{i+1}$ with the key $K_i$ of $J_i$ using the values $\{d_1,...,d_s, e_1,...,e_s\}$ from steps A12 and A13, and obtains the encrypted matrix that will be indicated as $\Pi^c_{i+1}$:

$$\Pi^c_{i+1} = \begin{pmatrix} \pi^c_{1,1} & \cdots & \pi^c_{1,t} \\ \vdots & \ddots & \vdots \\ \pi^c_{t,1} & \cdots & \pi^c_{t,t} \end{pmatrix} \qquad (14)$$

In order to build the encrypted elements $\pi^c_{i,j}$ of the matrix in step E2, $J_{i+1}$ performs the following operations:

F1: He obtains a value $g$ in a pseudo random manner, such that, $1 \le g \le s$.

F2: He chooses $g$ values randomly from the set $D$ made public in the initial phase (stepA12), $\{d_1,...,d_s\}$. These are the encrypted values of $\{\delta_1,...,\delta_s\}$, that fulfil $\delta_i \bmod z_i = 0$, $\forall i \in \{1,...,s\}$.

**F**3: He calculates the sum of these values, $h = \Sigma^g_{j=1} d_j$, $j \in \{1,..., g\}$. The sum of values 0 module $z_i$ leads to a

value that is also 0 module $z_i$.

**F**4: He obtains a value *c* in a pseudo random manner, such that *c* mod $z_i \neq 0$.

**F**5: He carries out the following product $h' = c \cdot h$.

**F**6: If the matrix component is $\pi_{i,j}$ *mod* $z_i = 0$, then the component of the encrypted matrix is $\pi^c_{i,j} = h'$.

**F**7: If the matrix component is $\pi_{i,j}$ *mod* $z_i \neq 0$, he performs the following additional operations:

**G**1: He obtains a value / in a pseudo random manner, such that $1 \leq / \leq s$.

**G**2: The matrix component will be the sum of *h*' and the encrypted value $e_l$ from the *E* set, which was made public in step A13; $\pi^c_{i,j} = h' + e_l$.

**E**3: He calculates the following permutation in an encrypted way by multiplying the encrypted card $w'_i$, by his encrypted matrix $\Pi^c_{i+1}$ with the key $K_i$.

$$w'_{i+1} = w'_{i} \cdot \Pi^c_{i+1} \tag{15}$$

**E**4: He builds the chain link, whose concept indicates that link contains $w'_{i+1}$ and that it is $J_{i+2}$ who must perform the following operation. Attribute $V_k$ contains the encrypted value $w'_{i+1}$.

The process is repeated with $J_{i+2},...,J_n$, up to $J_{n..}$ $J_i$ receives the link built by $J_n$ and performs the following operations.

**H**1: He checks the validity of the link created by $J_n$.

**H**2: He obtains the card $w_n$, by decrypting $w'_n$, with his private key $w_n = D_{K_i}(w'_n)$. The protocol is completed with the previous step and therefore player $J_i$ obtains a reversed card.

In order to discard a card, a player 101 builds a link in the DNC chain. The concept $C_k$ of said link indicates that player $J_i$ discards a card. Attribute $V_k$ contains the encrypted value of said discarded card.

In the reversed cards game protocol described above, $J_i$ chooses a single card in each implementation of said protocol. But the protocol allows a player 101 to obtain several cards in a single implementation. For this optimisation, it is first necessary to define the multi-card concept.

**Multi-card :** The multi-card is defined as a vector of *t* elements, with *t* being the number of cards in the pack, and z a given prime value,

$$\xi = (a_1, \ldots a_t) \tag{16}$$

Where this vector has more than one index $a_i$ such that $a_i$ *mod* $z \neq 0$. The remaining $a_j$ indices are in the form of $a_j$ *mod* $z = 0$. The index *i,* of each element $a_i$ *mod* $z \neq 0$, indicates one of the values of the multi'-card. In other words, a multi-card is a vector that represents more than one card.

The protocol varies in the following points:

- $J_i$ chooses the values he wants, $\{w_i, \ldots w_x\}$.
- He adds up these cards and obtains a multi-card $\xi = \Sigma^x_{i=1} w_i$.
- He builds the link in the DNC chain with the multi-card $\xi$ instead of *w*, as detailed in step B2, and continues with the protocol.

- In step $D3$ $J_i$ cancels all the rows whose index is equal to one of the values of the multi-card $\xi_i$.

- The protocol is developed in the same way as that described above. At the end of the protocol $J_i$ decrypts the reversed card that $J_n$ has calculated, and obtains a multi-card, that is, the set of chosen cards.

As mentioned in step D3, if a group of players 101 tries to obtain the cards of another player $J_i$ during the second, or subsequent times that the cards are dealt in the game, said group must build a multi-card with the values that $J_i$ has requested and encrypt it. However, the group will not obtain the cards of $J_i$, because the card that is obtained, when asking for a card that has already been requested, is a vector with all the indices different from zero module $z_i$. This is so, owing to the transformation of the matrix $\Pi_i$ in step D3.
The multi-card obtained is a void card, because it does not provide any information. All the indices are different from zero module $z_i$. At the end of the protocol the group of dishonest players 101 who have asked for an already requested card will not be able to show their cards.
Once the hand is finished, the players 101 reveal their private key and their permutation. Each participant in the game performs the following operations:

- He verifies that each player $J_i$ has used the permutation $\pi_i$ to which he has committed himself by sending $Cp_i$, in step A5. To do this, he verifies the commitment protocol of each player 101.

- He decrypts the cards $\{w'_1, ..., w'_t\}$ that each player 101 has made public in step A16, and checks that the pack is correct.

- With the private key of each player 101, he decrypts the result of applying the permutations to the reversed cards, as described in steps D5 and E4. He checks that these operations coincide with the permutation of the player 101 who has performed the action.

- He checks that the cards that each player 101 has discarded have not been used in the result of the game.

- The DNC chain makes it possible to prove to a third party the incorrect actions that a dishonest player 101 has made.

Some of the manipulations that the players 101 could carry out are detailed below, as well as the way in which they are all detected by verifying the actions contained in the DNC chain.

**A player uses a mistaken** $z_i$ : If, in the construction of the matrix of cards that are equivalent to the $z_i$ *of* $J_i$, $J_k$ uses $z_j$ such that $z_j \neq z_i$, when $J_i$ decrypts $w'_n$ he will obtain a void card. $J_i$ will necessarily report this action, because if not at the end of the game and he will not be able to show his cards. Verifying the game hand will uncover $J_k$.

**A player does not use the** $\pi_i$ **to which he is committed:** A player can use a different permutation to the one to which he is committed throughout the game, or change it during some instants of the game. In the first case, at the end of the game this dishonest action will be detected. In the second case, the players 101 can obtain duplicate cards. The player 101 who receives a repeated card asks for the game hand to be revised. If the action is not detected during the game, in the verifying stage the person who carried out the manipulation will be discovered.

**The values of the set** $D$ $\{d_1, ... d_s\}$ **are incorrect:** If a player 101 does not provide the correct values, the cards that are obtained will be void. The players 101 will build their matrix $\Pi^c_i$ with these values, and when operating with this matrix the resulting cards will be void. The player 101 who obtains a void card asks for the game to be revised.

**The values of the set** $E$ $\{e1, ...e_s\}$ **are incorrect:** As in the point above, the construction of the card permutation matrix will be incorrect. The players 101 will obtain void cards. By verifying the game the infringer will be discovered.

**The encrypted cards** $\{w'_1, ..., w'_n\}$ **are not valid:** In the verification phase it will be verified that the player 101 has provided an incorrect pack. The player 101 does not obtain any advantage in this action, because his manipulation will be discovered.

**A participant in the game builds an incorrect link:** During the implementation of the protocol, each player 101 verifies the correct construction of the links. When a player 101 introduces an incorrect link, the players 101 report the discrepancy.

**A player chooses a pre-selected value** *w*: The values requested in step B2 are found in the DNC chain. If a player 101 asks for a pre-selected value, the rest can prove that a different value must be requested.

**A player does not correctly encrypt his matrix**: An incorrect encryption leads to void cards, or repeated values. In the event this occurs, the rest of the players 101 will be able to detect the manipulation in the verification phase.

**A player withdraws during the initialization phase**: If a player 101 withdraws during the initialization phase the game continues without this player 101.

**A player withdraws once the initialization phase is complete**: If a player 101 withdraws before the game starts, the game develops without said player 101. The composition of permutations will be performed without his permutation.

**A player withdraws in the middle of the game**: In this case the game must finish at this point. The players 101 show the cards, and the game is verified. If the player who has abandoned the game does not justify his abandoning, he is sanctioned.

With reference to Figures 1 and 4, the game cryptographic protocol for open cards is set out below. In said games, the players 101 play against the Online Casino, represented by the croupier. Black Jack is a typical example of open card games. Just as occurs in the traditional game, in the proposed protocol the cards are dealt in an open manner. The aim of the protocol is that these cards be obtained at random, without any party being able to force the value thereof.

In the proposed protocol, the mixture of the game elements, that is the card shuffling process, is carried out without the participation of any TTP. The cards are shuffled with the co-operation of all the participants in the game. In this way it is ensured that during the process no player 101, or group thereof, can force the final result component, that is, the final value of the card obtained. Each player 101 generates a random permutation of the cards in the pack which he keeps in secret and commits himself to by means of a commitment protocol. The shuffled pack of cards is made up of the composition of the permutations of all the players 101. Each player 101, in the preset order, applies his permutation to the value sent by the previous player. Using the permutations ensures the uniqueness of the cards obtained.

In the first step of the protocol, an order of the game elements is established, based on the pack of cards that is used. For example, if it is a Spanish pack, and it is placed in the following order: Gold Coins, Cups, Clubs and Swords, value 27 will correspond to the three of Clubs. All the players 101 are committed to this order. Also the order of the players 101 is set $\{J_1,...J_n\}$, this being the order in which the permutations are composed, $\pi_g = \pi_n \; o \; \pi_{n-1}...o \; \pi_1$. The last position usually corresponds to the croupier.

In the beginning of the protocol, a value *w* is determined and made public. Said value *w* belongs to a range of game elements and has not been selected previously. Said value *w* can be chosen by the players, or it can be preset by the game rules. The games rules can define explicitly the values *w* to be used, or that they be chosen by the players jointly.

In the preferred implementation, and in the detailed summary thereof, value w is chosen by player $J_i$. This value *w* has not been selected previously because the chosen values *w* are known, or because each player has a different range of values for choose from. As can be seen in step 401 in Figure 4, $J_i$ sends *w* to the first player $J_1$. In step 403, $J_1$ applies said value *w* to his permutation $\pi_1$, obtaining $w_1 = \pi_1(w)$ that is sent to $J_2$. This process 403 is repeated up to the last player, $J_n$. Said player applies the last permutation $w_n = \pi_n(w_{n-1})$ obtaining $w_n$ that is sent to $J_i$. According to the initially established order, $w_n$ corresponds to a card in the pack, and during the game hand it belongs to $J_i$.

The game actions are included in the DNC chain that is built during the game. This measure enables the players 101 to prove, to a third party, the actions that have taken place.

The protocol is described formally below. First of all, the initialization phase is detailed, then the process for obtaining a card, and finally the verification of the honesty of the game.

The initialization phase is implemented at the beginning of each game hand. The croupier builds a chain link. Concept $C_k$ indicates the beginning of the period for generating a combined result.

Each player $J_i$ preferably performs the following operations:

- He obtains a permutation $\pi_i$ of the *t* cards in the pack, by means of a pseudo random generator.

- He calculates the operations to carry out the bit commitment protocol, $Cp_k$. In the preferred implementation, the described commitment protocol is used, however, any of the ones mentioned in the background to the invention

can be used.

- Each player $J_i$ calculates his link independently, with this action leading to an expansion of the DNC chain, with concept $C_k$ of the link detailing that the link is the commitment of $J_i$. Attribute $V_k$ contains said commitment $Cp_i$. The link as defined is sent to all the participants. Each participant verifies that the expansion is correct.

The croupier performs the following operations in parallel:

- By means of a pseudo random generator, he obtains a permutation $\pi_c$ of the pack of *t* cards.
- He calculates the commitment $Cp_c$ for his permutation $\pi_c$.

Once the croupier has received all the links containing the commitments of the players 101, he contracts the chain, with concept $C_k$ of this link detailing that the commitment period has finished, and that said link contains the croupier's commitment $Cp_c$, in attribute $V_k$.

In order to obtain a card, any player 101, $J_i$, performs the following operations.

- He chooses an initial value *w* that has not been used previously. $J_i$ knows the values that have been chosen because the requests are public.
- He builds the next chain link. Concept $C_k$ of the link describes that $J_i$ wants the cards corresponding to the value contained in attribute $V_k = w$.

Using the link sent by $J_i$, $J_1$ performs the following operations:

- He checks the correct construction of the link received from $J_i$ and obtains *w*.
- He applies the received value *w* to his permutation, $w_1 = \pi_1(w)$.
- He builds the next chain link, with the concept $C_k$ of said link indicating that $J_2$ must apply his permutation to value $w_1$. Attribute $V_k$ contains $w_1$.

The process is repeated with the rest of the players 101 $\{J_1,...J_n\}$, up to $J_n$. This calculates the last permutation, $w_n = \pi_n(w_{n-1})$, which is the value of the card of $J_i$. $J_n$ builds the next chain link. Concept $C_k$ describes that said link contains the card of $J_i$, in attribute $V_k = w_n$.

In the claims, said value $w_n$ is indicated as value *p*.

When the game hand has finished, the croupier builds the link that indicates the end of the game hand. Value $V_k$ of said link contains the data for verifying the croupier's commitment protocol. Each player 101, once he has said link, builds the next chain link. Concept $C_k$ indicates that attribute $V_k$ contains the information for verifying the commitment protocol of $J_i$. Typically, this information will include the permutation of player 101. The operation is performed in parallel by all the players 101. This means that the chain expands in this point. When all the participants in the game have the information for verifying the commitment protocols, they take the following action:

- They verify the commitment protocols of the rest of the participants in the game.
- They calculate the permutation of the game hand $\pi_g$, from the composition of the permutations provided by the players 101, $\pi_g = \pi_n \circ \pi_{n-1} \circ ... \circ \pi_1$.
- With $\pi_g$, and the values *w* requested during the game, they verify that the same cards are obtained.
- In case of an error is found in the previous step, the calculation of the permutation is performed with each $\pi_i$. Using this in-depth analysis and the DNC chain the dishonest player 101 is found.

Once the game hand has been verified satisfactorily, the croupier builds the link whose $C_k$ concept details that attribute $V_k$, contains the results of the game. This link contracts the DNC chain.

Below, and with reference to Figure 5, the game cryptographic protocol is presented for the games of throwing (also known as random draw games) implemented with roulette wheels, throwing dice or a fruit gaming machine, or their equivalent representations. In said game, a unique value *p* or result is generated, characterised in that each of

the players obtains his component of the result which coincides with said unique value or result. The aim of the protocol is that said result will be obtained at random, without any party forcing its value and without the participation of any TTP.

Figure 5 shows the steps in the game cryptographic protocol for throwing games. Initially a value *w* is determined and made public. Said value *w* can be chosen by the players, or it can be preset by the game rules. The game rules can define explicitly the values *w* to use, or that they be chosen by the players jointly. In the preferred implementation, and in the detailed explanation thereof, value *w* is chosen by $J_i$. In step 501, $J_i$ generates a value and a permutation of the game elements in a pseudo random manner, commits himself to them by means of a commitment protocol and sends the commitment obtained to the rest of the players 101. The commitment protocol described above is the one used in the preferred implementation, but any of the ones mentioned in the background to the invention can be used. All the players 101, in step 503, calculate a permutation of the game elements in a pseudo random manner, and they commit themselves to it, sending the commitment to said permutation to the rest of the participants in the game. In step 505 the players 101 have received the commitments from the players 101, and they show the information necessary to verify the commitment, or the committed information. In step 507, the players 101 verify the commitment protocol of the rest of the participants in the game, and they obtain the result of the game *p*.

The protocol guarantees that this value is generated in a joint and honest way. All the actions in the game are included in a DNC chain to be analysed if necessary.

At the beginning of the throw, an order is established among the players 101. The croupier builds the link having the $C_k$ concept that indicates the beginning of the period for generating the game result. The croupier is one of the players 101 taking part in the game. The value of said link contains the said order and the player 101 who takes the throw. Each $J_i$, including the croupier, performs the following operations, once he has received said link.

- He obtains a permutation of the results of the game $\pi_i$, by means of a pseudo random generator. In the case of a roulette wheel, for example, it would generate a permutation of the 38 possible values. If $J_i$ is the one throwing the dice, or turning the roulette wheel, he performs the following additional operation: he obtains a value *w* in a pseudo random manner, and includes it in the commitment protocol together with the permutation $\pi_i$.

- He calculates the commitment protocol operations, obtaining $Cp_i$.

- He builds the link having the $C_k$ concept that describes that the link in attribute $V_k$ contains the commitment $Cp_i$ of $J_i$. In this point, the DNC chain expands, because all the players build their link in parallel.

Once the commitment period has finished, the croupier builds the following chain link, having the $C_k$ concept that indicates that attribute $V_k$ contains the croupier's permutation $\pi_c$, and that the initial phase has finished. This link contracts the DNC chain. The contraction also prevents any player 101 from subsequently varying his commitment.

Once the rest of the players 101 receive the link with the croupier's permutation, they build the next chain link. Each $J_i$ performs this operation independently, therefore the DNC chain expands in this point. The $C_k$ concept of said link describes that $V_k$ attribute contains the values for verifying the commitment of $J_i$. This information normally includes the permutation $\pi_i$, and value *w* in the case of the participant who makes the throw.

The participants now have the information necessary for verifying the commitment protocol and they take the following action:

- They check that the rest of the participants in the game have maintained their commitment.

- With the permutations $\{\pi_1,..., \pi_n\}$, from all the participants and the established order, they build the general permutation, $\pi_g = \pi_n \circ \pi_{n-1} \circ ... \circ \pi_1$.

- They apply value *w*, provided by the player 101 who makes the throw, to the permutation and they obtain the result of the game, $p = \pi_g(W)$.

Once the croupier has obtained the result of the throw, he builds the next link. The concept of this link describes that attribute $V_k$ contains the obtained result *p*. The DNC chain contracts at this point.

This same operation would be used in the games similar to bingo or keno. In said games, a set of values $\{w_i,...w_k\}$ would be chosen instead of a unique value *w*, that would allow all the necessary values *p* in said games to be obtained.

The vector and matrix representation of the game elements covered in claims 13 and 14 would also be applicable to the open card and throwing game protocols. However, as no computational advantage is obtained, the preferred implementation does not cover this aspect.

The preferred implementation does not describe the use of a central node for managing the communication

between the *n* players. However, it would be possible to use said central communication entity to develop the game. In this case, this trustworthy central unit could have the permutations of the players and use them to calculate the values of the result, corresponding to cards, balls for bingo, or the like. With this arrangement, the same guarantees of honesty are not achieved as in the preferred description, since said trustworthy entity is required. However, such an arrangement would enable the same guarantees to be obtained as those offered by the afore-mentioned patents US 6,264,557 and US 6,165,072.

## Claims

**1.** Impartial method for obtaining the result of a game played over a communication network using related computer means and/or computer programs, with a set of *n* players or parties taking part in said game and *n* being at least two, said game being able to comprise elements such as cards, dice, roulette numbers, fruit gamming machines or the like, **characterised in that** it involves the following steps:

a) identify the different *t* elements of the game, so that an order of said elements can be established, and therefore a number between 1 and *t* can correspond to each one;
b) assign to each player, an arbitrary permutation of said *t* game elements of step a), which is kept secret;
c) apply a commitment protocol to said secret permutation of step b) of each player, and make a resulting commitment accessible to the rest of the players; and
d) generate the result of said game by using at least part of said secret permutations of said players.

**2.** Method, according to claim 1, **characterised in that** it involves an additional step, prior to step d), for ordering the permutations of said *n* players, which will be used in step d), based on a certain criterion, such as the order in which said players start the game.

**3.** Method, according to claim 2, **characterised in that** said operation of at least part of the permutations of step d) is carried out so that it is possible to verify the correctness of the result of the game, using a certain value w between 1 and *t*, prefixed by the rules of the game or chosen arbitrarily, operating said value *w* according to said order of the permutations with at least the permutations of the players who have not taken part in selecting *w*, and with all the permutations in the event that the value has been prefixed, generating a value *p* that represents an element of the game, and which will form part of the result of said game.

**4.** Method, according to claim 3, where the result of the game is deduced from said value *p*, in a game such as roulette, throw, or the like.

**5.** Method, according to claim 3, where the operations carried out to generate said value *p* are repeated using a different value *w* each time, until as many values *p* are generated as are necessary to determine the result of said game.

**6.** Method, according to claim 5, where the results of the game are deduced from the values *p* that are generated, in a game such as Bingo, Keno or the like.

**7.** Method, according to claim 5, **characterised in that** step d) that consists in generating the result of said game involves the following steps:

d1) provide to computing means of at least one of said players with access to the secret permutations of the rest of the players; and
d2) generate through said computing means and said permutations of step d) said values *p*.

**8.** Method, according to claim 5, **characterised in that** each player is assigned exclusively at least one of said values *p*, and the winner of the game is determined according to the values *p* of each player.

**9.** Method, according to claim 8, **characterised in that** step d) that consists in generating the result of said game involves the following steps:

d1) provide the computing means of at least one of said players with access to the secret permutations of the rest of the players;

d2) generate through said computing means and said permutations of step d) said values *p*; and

d3) provide each player with access to said values *p* that correspond to them.

**10.** Method, according to claim 8, **characterised in that** said game is a game of open cards or the like, in other words the players ordered between 1 and *n* according to said order of the permutations is dealt cards in an open manner, and **in that** a player *i* obtains said at least one of said assigned values *p*, from said value *w* according to the following steps:

I1) operate said value *w* with said secret permutation of the first player, using the computing means thereof, generating a permuted value; and
I2) operate the secret permutation of each player between 2 and *n*, using each player's own computing means, with the permuted value of the previous player, to which access is provided, generating a new permuted value, and finally with the permuted value generated by the last player *n* corresponding to said game element *p*.

**11.** Method, according to claim 8, **characterised in that** said game is a reversed card game or the like, in other words the players ordered between 1 and *n* according to said order of the permutations, are dealt cards in a way that the player that asks for a card, or a set of cards, is the only one who knows the value thereof, and **in that** a player *i* obtains said at least one of said assigned values *p*, from said value *w* according to the following steps;

p1) operate said value w with said secret permutation of the first player, using the computing means thereof, generating a permuted value;
p2) operate said secret permutation of each player between 2 and *i*-1, using in each case each player's own computing means, with the permuted value of the previous player to which access is provided, generating a new permuted value;
p3) operate the secret permutation of each player *i*, using the computing means thereof, with the permuted value of the player *i*-1, to which access is provided, generating a new permuted value which is immediately protected by concealing the content by means of a system that allows operation with protected values;
p4) operate said secret permutation of each player between *i* +1 and *n*, using in each case each player's own computing means, with the protected permuted value of the previous player, to which access is provided, generating a new protected permuted value; with said last player *n* obtaining the protected value *p* of said player *i*; and
p5) remove the protection from said protected value *p*.

**12.** Method, according to claim 11, **characterised in that** said protection of the new permuted value of player *i* consists of an encryption by means of a secret key assigned to each player *i* with a homomorphic cryptosystem, that allows operation with encrypted data.

**13.** Method, according to claim 12, **characterised in that** in step d) the secret permutation of each player between *i* +1 and *n* is protected additionally using the same protection system as that used by player *i*, with said protected value to which access is provided operating then with his protected permutation.

**14.** Method, according to claim 11, **characterised in that** for operating purposes in step p4) in said step p3) said new permuted value of player *i* is represented with a vector of *t* values, which indicates a game element corresponding to a number *j*, between 1 and *t*, or to a set of said new permuted values that indicate a subset of game elements, corresponding to a subset of numbers *j1*, *j2*, ... each one of them between 1 and *t*, where the value of the position *m* in said vector other than *j* or *j1, j2, ...* is zero module z, and the value of the position *m* equal to *j* or equal to *j1*, *j2*, ... is different from zero module z, with *z* being an integer assigned to player *i*.

**15.** Method, according to claim 12, **characterised in that** said secret permutation of any one of the players between *i* +1 and *n*, is represented for operating purposes, by means of a matrix of *t by t* elements, with *t* being equal to the number of game elements and where given an integer z, assigned to said player *i*, said matrix is built as follows: each row *k* of the matrix is a vector of *t* values with all these values being zero module z, except the value occupying the position equal to the result of applying said permutation to value *k*.

**16.** Method, according to claim 15, **characterised in that** an encrypted representation is generated of said matrix of *t* by *t* elements of each player of *i* +1 to *n*, using said secret key of player *i.*

**17.** Method, according to claim 16, **characterised in that** in order to generate said encrypted representation of the matrix of *t by* t elements, two sets D and E of encrypted values are used with the secret key of the player *i,* where the encrypted values of said first set D are zero module z, and the encrypted values of said second set E are different from zero module z, with *z* being the afore-mentioned integer assigned to the player *i*.

**18.** Method, according to claim 17, **characterised in that** for each element of said matrix of *t* by *t* elements, which is zero module z *g1* values of said set D are chosen arbitrarily and they are all added together, and for each element of said matrix that is different to zero module z g2 values are selected arbitrarily from said set D and they are added to a value chosen at random from said set E.

**19.** Method, according to claim 11, **characterised in that** for operating purposes in step p4) in said step p3) said new permuted value of player *i* is represented by a vector of *t* values, which indicates a game element corresponding to a number *j*, between 1 and *t*, or to a set of said new permuted values that indicate a subset of game elements, corresponding to a subset of numbers *j1, j2*, ... each one of them between 1 and *t*, where the value of the position *m* in said vector other than *j* or *j1, j2, ...* is zero module z, and the value of the position *m* equal to *j* or equal to *j1, j2, ...* is different to zero module z, with *z* being an integer assigned to player *i*, and **in that** said secret permutation of any one of the players between *i* +1 and *n*, for operating purposes, is represented by means of a matrix of *t by t* elements, with *t* being equal to the number of game elements and where given an integer *z*, assigned to said player *i*, said matrix is built as follows: each row *k* of the matrix is a vector of *t* values with all these values being zero module z, except the value occupying the position equal to the result of applying said permutation to value *k*.

**20.** Method, according to claim 19, **characterised in that** in order to operate a game element with a permutation a multiplication is carried out between the game element represented in vector form and the permutation represented in matrix form, using the same integer value z for the two representations.

**21.** Method, according to claim 3, **characterised in that** the verification of the correctness of the result involves at least the following steps:

m1) allow the rest of the players access to said secret permutation of each player and to the information necessary for verifying said commitment protocol associated thereto;

m2) verify said commitment protocol of the rest of the players; and

m3) compose the permutations in the established order to generate the resulting permutation, and operate said values w with said resulting permutation, obtaining said values p, and check that they coincide with those obtained in the game.

**22.** Method, according to claim 1, **characterised in that** said operations and/or commitments carried out therein are duly associated in a hash chain, where each link in said hash chain is made up of at least two parts, a first one containing information, where said attribute of data contains at least one of the following pieces of information: the time instant, the description of the link, and additional values, and a second part made up of a chained hash of said data, and **in that** said chained hash of said data is built as follows:

a) link the chained hash of the previous link to the data of the link under construction;
b) obtain the hash of the result of step a).

**23.** Method, according to claim 22, **characterised in that** it involves an additional step where authenticity is given by means of the player's private key to whoever builds the link to said result of step b).

**24.** Method, according to claim 22, **characterised in that** said hash chains are obtained in an efficient manner, by expanding the chain in the points where parallel calculations can be carried out, and by contracting said chain when the steps need to be carried out sequentially, said expansion consisting in using the same chained hash of a link S for each one of said players, from which the hash chain is expanded, and said contraction consisting in generating a link *T* that contains the chained hash of the last of the links in said expanded chains of said players.

**25.** Method, according to claim 1, **characterised in that** said commitment protocol of step c) of any player for a value *R1*, representing a permutation, involves the following operations:

c1) assign a pair of asymmetric keys to each player;
c2) generate a value in an arbitrary and secret manner *R2*;
c3) add certain redundancy to *R1*, so that *R3* is obtained; and
c4) encrypt *R3* with the private component of each pair of the player's asymmetric keys, and encrypt *R2* with the public component of said pair of asymmetric keys, obtaining the commitment *Cp* by carrying out an operation such as an exclusive OR exclusive of the encrypted values *R2* and *R3*.

**26.** Method, according to claim 25, **characterised in that** verifying said commitment protocol involves the following operations:

c5) open the commitment by revealing *R2*;

c6) encrypt said value *R2* with said public asymmetrical key of the player who has committed themselves and calculate the inverse operation, such as an exclusive OR with the commitment *Cp*; and

c7) encrypt the result obtained in step a) with the public asymmetrical key of said party that has committed itself obtaining *R3*, and with the commitment being valid if *R3* has the expected redundancy.

**27.** Computer program that can be loaded directly into the internal memory of a digital computer and comprises computer program code parts for carrying out the operations to execute said open card game, according to the claim 10.

**28.** Computer program that can be loaded directly into the internal memory of a digital computer and comprises computer program code parts for carrying out the operations to execute said reversed card game, according to the claims 11 to 24.

**29.** Computer program that can be loaded directly into the internal memory of a digital computer and comprises computer program code parts for carrying out the operations to execute said game of throw, according to claim 4.

**30.** Computer program that can be loaded directly into the internal memory of a digital computer and comprises computer program code parts for carrying out the operations to execute said game of Bingo or Keno, according to the claim 6.

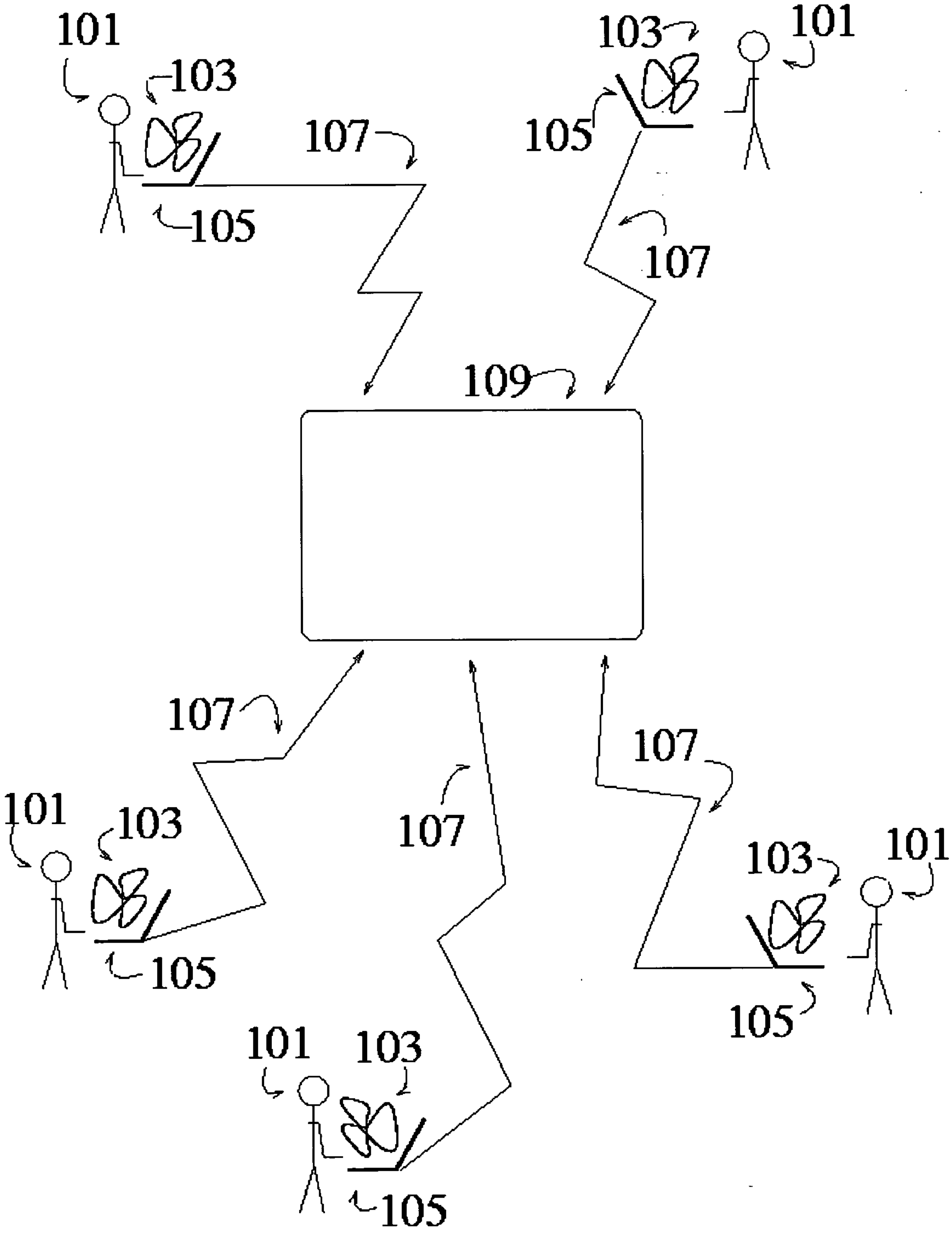
101
103
105
107
101
103
105
107
109
107
101
103
105
107
107
103
101
105
101
103
105

**Fig. 1**

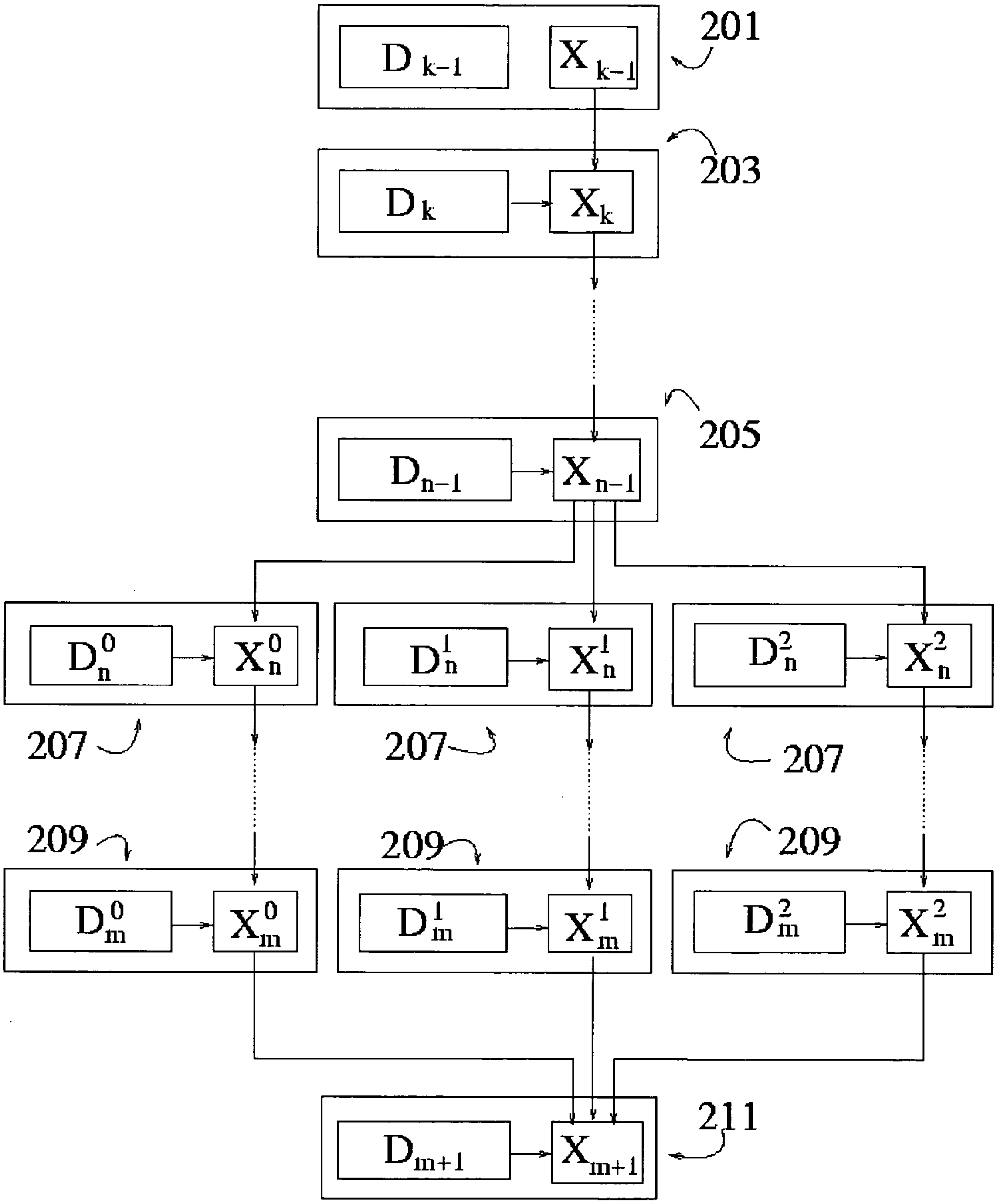

201
$D_{k-1}$
$X_{k-1}$
203
$D_k$
$X_k$
205
$D_{n-1}$
$X_{n-1}$
$D_n^0$
$X_n^0$
$D_n^1$
$X_n^1$
$D_n^2$
$X_n^2$
207
207
207
209
209
209
$D_m^0$
$X_m^0$
$D_m^1$
$X_m^1$
$D_m^2$
$X_m^2$
211
$D_{m+1}$
$X_{m+1}$


**Fig. 2**

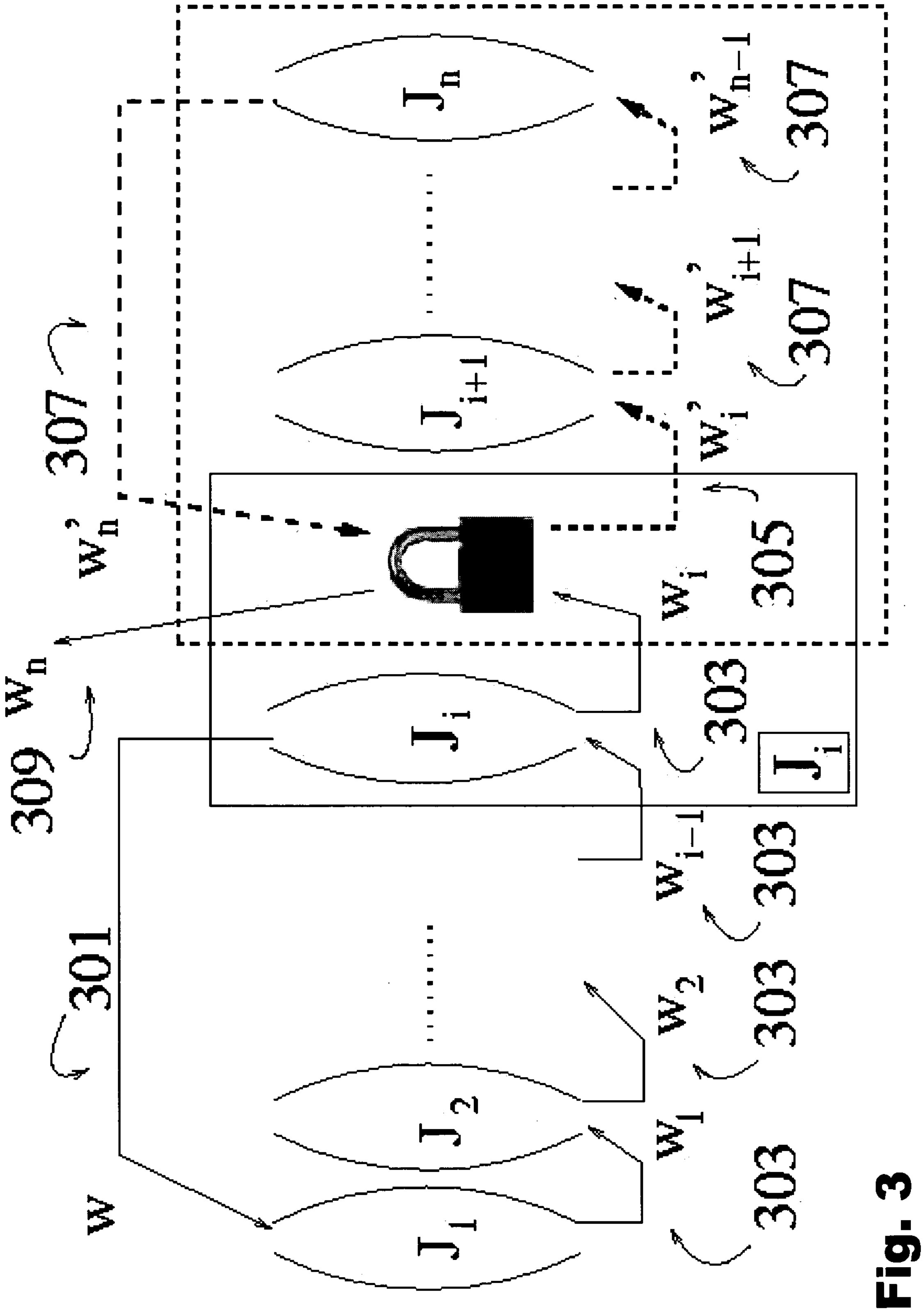

W
301
309
$W_n$
$W_n'$
307
$J_1$
$J_2$
$J_i$
$J_{i+1}$
$J_n$
$W_1$
$W_2$
$W_{i-1}$
$W_i$
$W_i'$
$W_{i+1}'$
$W_{n-1}'$
303
303
303
303
303
305
307
307
$J_i$


Fig. 3

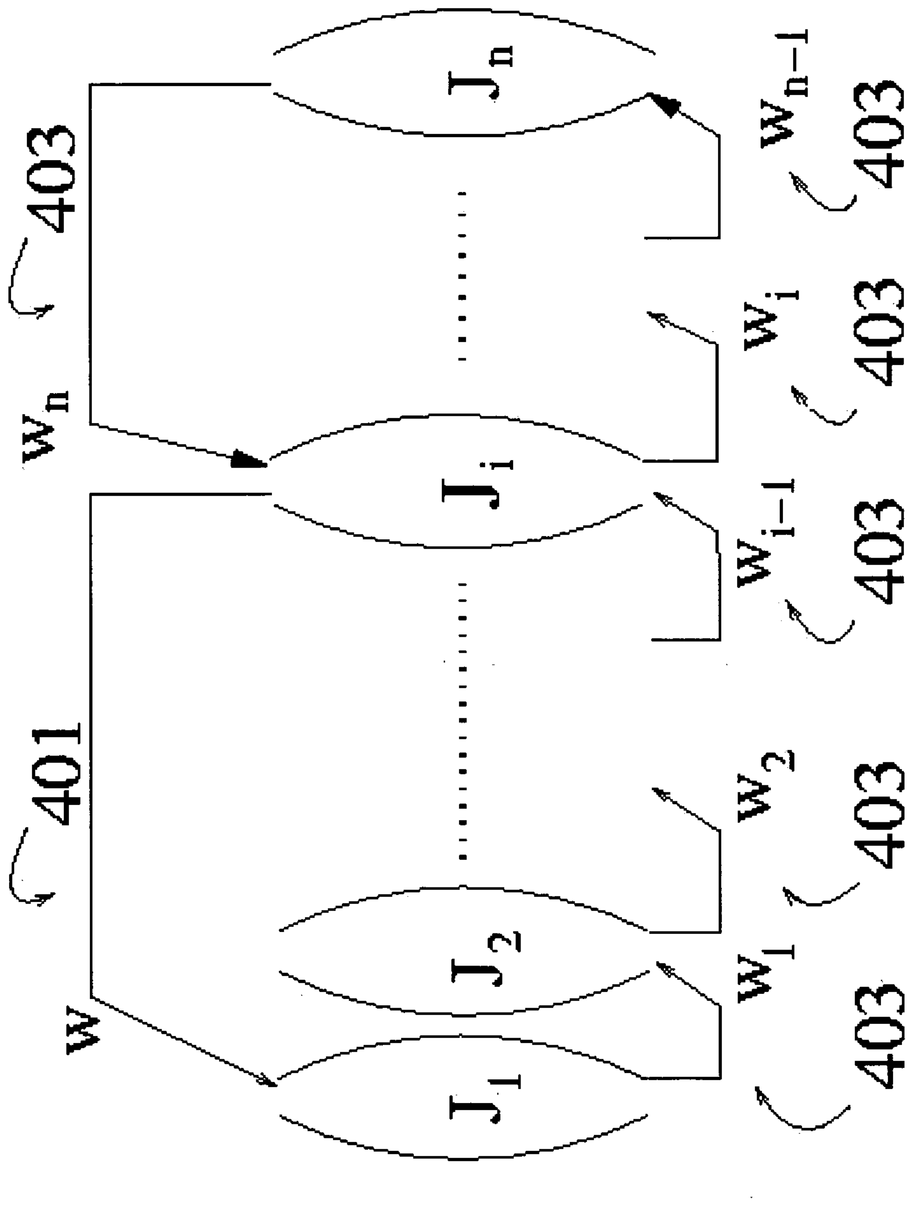


Fig. 4

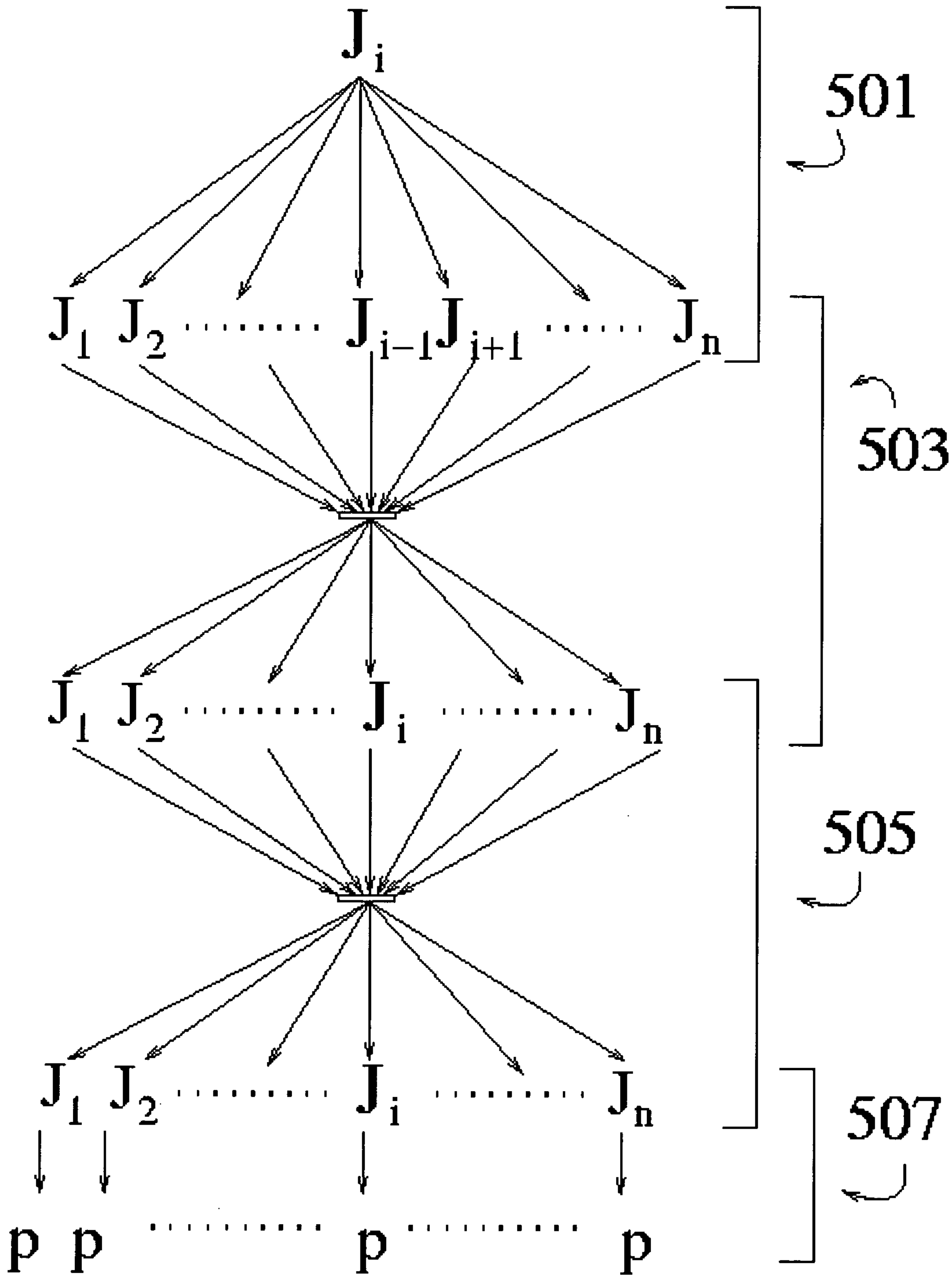


Fig. 5

## INTERNATIONAL SEARCH REPORT

International application No.
PCT/ES/02/00485

A. CLASSIFICATION OF SUBJECT MATTER

IPC 7 A63F 9/24, H04L 9/32

According to International Patent Classification (IPC) or to both national classification and IPC

B. FIELDS SEARCHED

Minimum documentation searched (classification system followed by classification symbols)

IPC 7 A63F 9/24, 13/00, H04L 9/00, G06F 19/00

Documentation searched other than minimum documentation to the extent that such documents are included in the fields searched

Electronic data base consulted during the international search (name of data base and, where practicable, search terms used)

EPODOC, WPI, PAJ, CIBEPAT

C. DOCUMENTS CONSIDERED TO BE RELEVANT

| Category* | Citation of document, with indication, where appropriate, of the relevant passages | Relevant to claim No. |
|---|---|---|
| A | US 2002071557 A1 (NGUYEN) 13.06.2002, **The whole document** | 1-30 |
| A | US 2002037767 A1 (EBIN) 28.03.2002, **The whole document** | 1-30 |
| A | WO 9830297 A1 (SILICON GAMING INC.) 16.07.1998, **The whole document** | 1-30 |
| A | US 6264557 B1 (SCHNEIER et al.) 24.07.2001, **The whole document** | 1-30 |
| A | US 6264560 B1 (GOLDBERG et al.) 24.07.2001, **The whole document** | 1-30 |

☐ Further documents are listed in the continuation of Box C.

☒ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 FEB 2003 (07.02.03)** | **13 FEB 2003 (13.02.03)** |
| Name and mailing address of the ISA/ S.P.T.O. Facsimile No. | Authorized officer Manuel Fluvià Rodríguez Telephone No. |

Form PCT/ISA/210 (second sheet) (July 1992)

**INTERNATIONAL SEARCH REPORT**
Information on patent family members

International Application No
PCT/ES/02/00485

| Patent document cited in search report | Publication date | Patent familiy member(s) | Publication date |
|---|---|---|---|
| US 2002071557 A1 | 13.06.2002 | AU 9715401 A | 13.06.2002 |
| | | US 2002116615 A | 22.08.2002 |
| | | CA 2364424 A | 07.06.2002 |
| US 2002037767 A1 | 28.03.2002 | NONE | |
| WO 9830297 A1 | 16.07.1998 | AU 6018098 A | 03.08.1998 |
| | | ZA 9800220 A | 27.01.1999 |
| | | US 6104815 A | 15.08.2000 |
| | | AU 728161 B | 04.01.2001 |
| US 6264557 B1 | 24.07.2001 | WO 9829793 A | 09.07.1998 |
| | | AU 5621998 A | 31.07.1998 |
| | | EP 1021229 A | 26.07.2000 |
| | | US 6099408 A | 08.08.2000 |
| | | JP 2000513983 T | 24.10.2000 |
| | | AU 741888 B | 13.12.2001 |
| | | US 200202076 A | 03.01.2002 |
| | | US 6450885 A | 17.09.2002 |
| US 6264560 B1 | 24.07.2001 | CA 2243582 A | 24.07.1997 |
| | | WO 9726061 A | 24.07.1997 |
| | | AU 1833097 A | 11.08.1997 |
| | | US 5823879 A | 20.10.1998 |
| | | CN 1212634 A | 31.03.1999 |
| | | EP 956119 A | 17.11.1999 |
| | | JP 2000510352 T | 15.08.2000 |
| | | US 618336 B | 06.02.2001 |

Form PCT/ISA/210 (patent family annex) (July 1992)